(19) Europäisches Patentamt | European Patent Office | Office européen des brevets

(11) **EP 4 564 984 B1**

(12) **EUROPEAN PATENT SPECIFICATION**

(45) Date of publication and mention
of the grant of the patent:
**24.06.2026 Bulletin 2026/26**

(21) Application number: **23871096.6**

(22) Date of filing: **28.09.2023**

(51) International Patent Classification (IPC):
**H04W 74/0833** *(2024.01)*

(52) Cooperative Patent Classification (CPC):
**H04W 74/0833; H04W 56/001; H04W 74/006**

(86) International application number:
**PCT/CN2023/123014**

(87) International publication number:
**WO 2024/067872 (04.04.2024 Gazette 2024/14)**

(54) **RANDOM ACCESS METHOD, APPARATUS, AND SYSTEM**

DIREKTZUGRIFFSVERFAHREN, -VORRICHTUNG UND -SYSTEM

PROCÉDÉ, APPAREIL ET SYSTÈME D'ACCÈS ALÉATOIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.09.2022 CN 202211215716**
**15.05.2023 CN 202310545494**

(43) Date of publication of application:
**04.06.2025 Bulletin 2025/23**

(73) Proprietor: **Huawei Technologies Co., Ltd.**
**Shenzhen, Guangdong 518129 (CN)**

(72) Inventors:
• **SHI, Meng**
  **Shenzhen, Guangdong 518129 (CN)**
• **LIAO, Shuri**
  **Shenzhen, Guangdong 518129 (CN)**
• **DOU, Shengyue**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A1- 3 621 273          WO-A1-2019/137534
WO-A1-2022/031004         CN-A- 109 802 814
CN-A- 110 167 164         CN-A- 112 788 777
CN-A- 113 853 822         US-A1- 2020 154 377

## Description

This application claims priority to Chinese Patent Application No. 202211215716.4, filed with the China National Intellectual Property Administration on September 30, 2022 and entitled "RANDOM ACCESS METHOD, APPARATUS, AND SYSTEM", and claims priority to Chinese Patent Application No. 202310545494.0, filed with the China National Intellectual Property Administration on May 15, 2023 and entitled "RANDOM ACCESS METHOD, APPARATUS, AND SYSTEM'.

## TECHNICAL FIELD

This application relates to the field of communication technologies, and in particular, to a random access method, an apparatus, and a system.

## BACKGROUND

In a new radio (new radio, NR) communication system, a terminal device needs to access a network device in a random access manner, to complete uplink synchronization.

Before the terminal device initiates random access, the network device may periodically broadcast a synchronization signal block (synchronization signal block, SSB). One or more SSBs broadcast by the network device are distinguished by using an index number (index) of the SSB. A period in which the network device broadcasts the SSB may be referred to as an SSB period. In addition, the network device may configure a random access configuration period (physical random access channel configuration period), configure a specific quantity of random access occasions (random access channel occasions, ROs) in the random access configuration period, and associatively map the broadcast SSBs to the ROs. A period formed by one or more random access configuration periods where ROs to which the SSBs are mapped are located is referred to as an association period (association period) or a mapping period (mapping period). Mapping association of the SSBs in the association period starts from a frame number 0. The association period uses a minimum value of a PRACH configuration period in a configuration table, and is required to satisfy at least one complete mapping between all the configured SSBs and the ROs in the association period. In one mapping, if there are some ROs to which no SSBs are mapped after mapping of SSBs to ROs is performed for an integer quantity of loops, no mapping relationships will be established between these ROs and SSBs. Further, after receiving the one or more SSBs broadcast by the network device, the terminal device may select one SSB, and send a preamble on an RO associated with the SSB, to request access from the network device.

However, according to a current random access solution, random access efficiency of the terminal device is low, and requirements of some communication systems may not be met. For example, currently, a start time domain position of an association period is a start time domain position of a system frame whose frame number is 0. As a result, after selecting an SSB, the terminal device may not be able to send a preamble in time on an RO that is associated with the SSB and that is in a current mapping period, and needs to wait for a next mapping period to send the preamble on an RO in the next mapping period, which increases a service delay.

## SUMMARY

Embodiments of this application provide a random access method, an apparatus, and a system, to resolve a problem of low random access efficiency of a terminal device in a current random access solution.

To achieve the foregoing objectives, the following technical solutions are used in embodiments of this application.

According to a first aspect, a random access method is provided. The method may be performed by a terminal device, may be performed by a component (for example, a processor, a chip, or a chip system) of a terminal device, or may be implemented by a logical module or software that can implement all or some functions of a terminal device. The method includes: receiving a target synchronization signal block in a synchronization signal block period from a network device; receiving first configuration information from the network device based on the target synchronization signal block, where the first configuration information includes a first offset value, the first offset value indicates interval duration between a start time domain position of a first association period and a start time domain position of a reference system frame, and the first association period is a 1$^{st}$ association period in one or more association periods corresponding to the synchronization signal block period; determining, based on the first configuration information and the target synchronization signal block, a random access occasion that is associated with the target synchronization signal block and that is in the one or more association periods; and sending a preamble to the network device on one random access occasion in the random access occasion associated with the target synchronization signal block.

Currently, the association period needs to start from a system frame whose frame number is 0. After the terminal device receives an SSB, for some factors, for example, the terminal device is located in a scenario (for example, an NTN system) with a large quantity of beams and limited resources, or for example, a bidirectional transmission delay and a processing delay of the terminal device, the terminal device may not be able to send the preamble in time on a corresponding RO in a current association period, increasing a random access delay. According to the random access method provided in this embodiment of this application, the terminal device may determine, based on the first offset value, an association period whose start time domain position is after the reference system frame. In other words, in this embodiment of this application, the start time domain position of the association period may have a specific offset relative to the reference system frame. Therefore, a probability that the terminal device can send the preamble on the RO in the current association period can be increased, the random access delay of the terminal device can be reduced, and random access efficiency of the terminal device can be improved.

With reference to the first aspect, in a possible design, the target synchronization signal block is associated with a plurality of random access occasions, and the synchronization signal block period corresponds to a plurality of association periods. The method further includes: receiving second configuration information from the network device based on the target synchronization signal block, where the second configuration information is used to configure a random access occasion in a second association period, the second configuration information includes a second offset value, and the second offset value indicates interval duration between the second association period and the first association period, or the second offset value indicates interval duration between a start time domain position of the second association period and the start time domain position of the reference system frame; determining the start time domain position of the second association period based on the second configuration information; determining the random access occasion in the second association period based on the second configuration information and the start time domain position of the second association period; and determining, based on the target synchronization signal block, a random access occasion that is associated with the target synchronization signal block and that is in the second association period.

According to a current random access method, a plurality of ROs associated with a single SSB in one SSB period are adjacent in time domain, and if the terminal device does not receive a RAR in a RAR window after sending the preamble on a corresponding RO, the terminal device needs to wait for a next corresponding RO to send the preamble. However, an interval between two adjacent time domain ROs usually exceeds the bidirectional transmission delay, the processing delay of the terminal device, or duration of the RAR window. Therefore, for the terminal device, only one of a plurality of adjacent ROs can be used in one SSB period, and there are not a plurality of access opportunities. According to the random access method in this embodiment of this application, one SSB period may correspond to a plurality of association periods, and the terminal device may determine, based on the second configuration information, the start time domain position of the second association period in the plurality of association periods corresponding to the SSB period as well as an RO configuration in the second association period. Therefore, a plurality of ROs associated with a same SSB may be distributed in different association periods, and different ROs associated with the same SSB are discontinuous in time domain. In the same SSB period, if the terminal device cannot send the preamble in time on a corresponding RO in a current association period, the terminal device may send the preamble on a corresponding RO in a next association period. In other words, the terminal device has a plurality of access opportunities in one SSB period. Therefore, the random access delay of the terminal device can be reduced, and the random access efficiency of the terminal device can be improved.

With reference to the first aspect, in a possible design, that the second configuration information is used to configure a random access occasion in a second association period includes: The second configuration information indicates that there is a random access occasion in a 1st reference time unit in a random access configuration period included in the second association period, where the reference time unit is a slot or a subframe. Alternatively, the second configuration information indicates that a quantity of reference time units in which there is a random access occasion in a random access configuration period included in the second association period is an integer multiple of 2.

According to a current protocol, a quantity of subframes including an RO that can be configured in a PRACH configuration period of a single system frame in an FR1 frequency band is 1, 2, 3, 5, or 10, and the subframes including an RO are discontinuous. On the one hand, if a quantity of SSBs is an integer multiple of 8, when the SSBs are mapped to ROs, RO resources whose quantity is not an integer multiple of the quantity of SSBs cannot establish association relationships with the SSBs and become invalid, causing a waste of uplink resources. On the other hand, when the subframes including an RO are scattered, remaining time-frequency resources that can be used for uplink data transmission are discontinuous, and it is unlikely to use continuous time-frequency resources to transmit uplink signaling with a heavy load, affecting access performance. According to the random access method in this embodiment of this application, the terminal device may determine, based on third configuration information, that there is the RO in the 1st reference time unit in the PRACH configuration period, so that a reference time unit in which there is an RO is as early as possible in the PRACH configuration period, and remaining continuous time-frequency resources can be used for uplink data transmission. Alternatively, the terminal device may determine, based on third configuration information, that the quantity of reference time units in which there is an RO in the PRACH configuration period is the integer multiple of 2, to avoid a case in which when a quantity of SSBs is an integer multiple of 8, RO resources whose quantity is not an integer multiple of the quantity of SSBs cannot be used to establish association relationships with the SSBs and become invalid, causing a waste of uplink resources.

With reference to the first aspect, in a possible design, that the second configuration information indicates that a quantity of reference time units in which there is a random access occasion in a random access configuration period included in the second association period is an integer multiple of 2 includes:

The second configuration information indicates that the quantity of reference time units in which there is a random access occasion in the random access configuration period included in the second association period is the integer multiple of 2, and the reference time units in which there is a random access occasion are continuous in time domain. According to this solution, continuous uplink resources may be provided for sending on ROs, improving the access performance.

With reference to the first aspect, in a possible design, the second configuration information indicates that the reference time units in which there is a random access occasion in the random access configuration period included in the second association period are first N reference time units in the random access configuration period, and N is an integer multiple of 2. According to this solution, continuous uplink resources may be provided for sending on ROs, and remaining continuous uplink resources may be used to transmit other uplink data.

With reference to the first aspect, in a possible design, the first configuration information includes first information, the first information is used to configure a random access occasion in the first association period, the second configuration information includes second information, the second information is used to configure the random access occasion in the second association period, and the first information is different from the second information. According to the random access method in this embodiment of this application, ROs in different association periods may be independently configured, which is more flexible than using a same set of configurations, and the terminal device may select, based on different cases, an RO in an association period to send the preamble.

With reference to the first aspect, in a possible design, the first information and the second information are used to configure a preamble format corresponding to the random access occasion. According to this solution, preamble formats on ROs in different association periods may be different, and the terminal device may flexibly select a preamble format of the preamble to be sent.

With reference to the first aspect, in a possible design, the first offset value is one of a quantity of milliseconds, a quantity of seconds, a quantity of symbols, a quantity of slots, a quantity of subframes, or a quantity of system frames. According to this solution, a plurality of manners of representing the interval duration by using the first offset value are provided, to achieve compatibility with a time unit in a current communication system.

With reference to the first aspect, in a possible design, the sending a preamble to the network device on one random access occasion in the random access occasion associated with the target synchronization signal block includes: sending the preamble to the network device on a target random access occasion in the random access occasion associated with the target synchronization signal block, where interval duration between a moment at which the target random access occasion is located and a moment at which the target synchronization signal block is located does not exceed valid duration.

According to this solution, the terminal device may restrict the RO selected to send the preamble to be within a validity period, so that a case in which an SSB corresponding to the RO selected by the terminal device is not an optimal SSB at a current moment is avoided, performance of the RO selected by the terminal device is ensured, and performance of sending a random access request is improved.

In a possible design, the valid duration is preconfigured by the terminal device or the network device or in a protocol, or is indicated by the network device. Alternatively, the valid duration is predefined in a protocol and indicated by the network device.

According to this solution, a plurality of manners of determining the valid duration are provided.

According to a second aspect, a random access method is provided. The method may be performed by a network device, may be performed by a component (for example, a processor, a chip, or a chip system) of a network device, or may be implemented by a logical module or software that can implement all or some functions of a network device. The method includes: sending a target synchronization signal block in a synchronization signal block period to a terminal device; sending first configuration information to the terminal device, where the first configuration information includes a first offset value, the first offset value indicates interval duration between a start time domain position of a first association period and a start time domain position of a reference system frame, and the first association period is a 1$^{st}$ association period in one or more association periods corresponding to the synchronization signal block period; and receiving a preamble from the terminal device on one random access occasion in a random access occasion that is associated with the target synchronization signal block and that is in the one or more association periods.

Currently, the association period needs to start from a system frame whose frame number is 0. After the terminal device receives an SSB, for some factors, for example, the terminal device is located in a scenario (for example, an NTN system) with a large quantity of beams and limited resources, or for example, a bidirectional transmission delay and a processing delay of the terminal device, the terminal device may not be able to send the preamble in time on a corresponding RO in a current association period, increasing a random access delay. According to the random access method provided in this embodiment of this application, the network device may send, to the terminal device, the first offset value indicating the interval duration between the start time domain position of the first association period and the start time domain position of the reference system frame, so that the terminal device may determine, based on the first offset value, an association period whose start time domain position is after the reference system frame. In other words, in this embodiment of this application, the start time domain position of the association period may have a specific offset relative to the reference system frame. Therefore, a probability that the terminal device can send the preamble on the RO in the current association period can be increased, the random access delay of the terminal device can be reduced, and random access efficiency of the terminal device can be improved.

With reference to the second aspect, in a possible design, the target synchronization signal block is associated with a plurality of random access occasions, and the synchronization signal block period corresponds to a plurality of association periods. The method further includes: sending second configuration information to the terminal device, where the second configuration information is used to configure a random access occasion in a second association period, the second configuration information includes a second offset value, and the second offset value indicates interval duration between the second association period and the first association period, or the second offset value indicates interval duration between a start time domain position of the second association period and the start time domain position of the reference system frame.

According to a current random access method, a plurality of ROs associated with a single SSB in one SSB period are adjacent in time domain, and if the terminal device does not receive a RAR in a RAR window after sending the preamble on a corresponding RO, the terminal device needs to wait for a next corresponding RO to send the preamble. However, an interval between two adjacent time domain ROs usually exceeds the bidirectional transmission delay, the processing delay of the terminal device, or duration of the RAR window. Therefore, for the terminal device, only one of a plurality of adjacent ROs can be used in one SSB period, and there are not a plurality of access opportunities. According to the random access method in this embodiment of this application, one SSB period may correspond to a plurality of association periods, and the network device may send the second configuration information to the terminal device, so that the terminal device may determine, based on the second configuration information, the start time domain position of the second association period and an RO configuration in the second association period in the plurality of association periods corresponding to the SSB period. Therefore, a plurality of ROs associated with a same SSB may be distributed in different association periods, and different ROs associated with the same SSB are discontinuous in time domain. In the same SSB period, if the terminal device cannot send the preamble in time on a corresponding RO in a current association period, the terminal device may send the preamble on a corresponding RO in a next association period. In other words, the terminal device has a plurality of access opportunities in one SSB period. Therefore, the random access delay of the terminal device can be reduced, and the random access efficiency of the terminal device can be improved.

With reference to the second aspect, in a possible design, the second configuration information indicates that there is a random access occasion in a 1st subframe in a random access configuration period included in the second association period. Alternatively, the second configuration information indicates that a quantity of subframes in which there is a random access occasion in a random access configuration period included in the second association period is an integer multiple of 2.

According to a current protocol, a quantity of subframes including an RO that can be configured in a PRACH configuration period of a single system frame in an FR1 frequency band is 1, 2, 3, 5, or 10, and the subframes including an RO are discontinuous. On the one hand, if a quantity of SSBs is an integer multiple of 8, when the SSBs are mapped to ROs, RO resources whose quantity is not an integer multiple of the quantity of SSBs cannot establish association relationships with the SSBs and become invalid, causing a waste of uplink resources. On the other hand, when the subframes including an RO are scattered, remaining time-frequency resources that can be used for uplink data transmission are discontinuous, and it is unlikely to use continuous time-frequency resources to transmit uplink signaling with a heavy load, affecting access performance. According to the random access method in this embodiment of this application, the terminal device may determine, based on third configuration information, that there is the RO in the 1st reference time unit in the PRACH configuration period, so that a reference time unit in which there is an RO is as early as possible in the PRACH configuration period, and remaining continuous time-frequency resources can be used for uplink data transmission. Alternatively, the terminal device may determine, based on third configuration information, that the quantity of reference time units in which there is an RO in the PRACH configuration period is the integer multiple of 2, to avoid a case in which when a quantity of SSBs is an integer multiple of 8, RO resources whose quantity is not an integer multiple of the quantity of SSBs cannot be used to establish association relationships with the SSBs and become invalid, causing a waste of uplink resources.

With reference to the second aspect, in a possible design, that the second configuration information indicates that a quantity of reference time units in which there is a random access occasion in a random access configuration period included in the second association period is an integer multiple of 2 includes: The second configuration information indicates that the quantity of reference time units in which there is a random access occasion in the random access configuration period included in the second association period is the integer multiple of 2, and the reference time units in which there is a random access occasion are continuous in time domain. According to this solution, continuous uplink resources may be provided for sending on ROs, improving the access performance.

With reference to the second aspect, in a possible design, the second configuration information indicates that the reference time units in which there is a random access occasion in the random access configuration period included in the second association period are first N reference time units in the random access configuration period, and N is an integer multiple of 2. According to this solution, continuous uplink resources may be provided for sending on ROs, and remaining continuous uplink resources may be used to transmit other uplink data.

With reference to the second aspect, in a possible design, the first configuration information includes first information, the first information is used to configure a random access occasion in the first association period, the second configuration information includes second information, the second information is used to configure the random access occasion in the first association period, and the first information is different from the second information. According to the random access method in this embodiment of this application, ROs in different association periods may be independently configured, which is more flexible than using a same set of configurations, and the terminal device may select, based on different cases, an RO in an association period to send the preamble.

With reference to the second aspect, in a possible design, the first information and the second information are used to configure a preamble format corresponding to the random access occasion. According to this solution, preamble formats on ROs in different association periods may be different, and the terminal device may flexibly select a preamble format of the preamble to be sent.

With reference to the second aspect, in a possible design, the first offset value is one of a quantity of milliseconds, a quantity of seconds, a quantity of symbols, a quantity of slots, a quantity of subframes, or a quantity of system frames. According to this solution, a plurality of manners of representing the interval duration by using the first offset value are provided, to achieve compatibility with a time unit in a current communication system.

With reference to the second aspect, in a possible design, the receiving a preamble from the terminal device on one random access occasion in a random access occasion that is associated with the target synchronization signal block and that is in the one or more association periods includes: receiving the preamble from the terminal device on a target random access occasion in the random access occasion that is associated with the target synchronization signal block and that is in the one or more association periods, where interval duration between a moment at which the target random access occasion is located and a moment at which the target synchronization signal block is located does not exceed valid duration.

According to this solution, the RO used to send the preamble may be restricted to be within a validity period, so that a case in which an SSB corresponding to the RO used to send the preamble is not an optimal SSB at a current moment is avoided, performance of the RO selected by the terminal device is ensured, and performance of sending a random access request is improved.

With reference to the second aspect, in a possible design, in a possible design, the valid duration is preconfigured by the terminal device or the network device or in a protocol, or is indicated by the network device. Alternatively, the valid duration is predefined in a protocol and indicated by the network device.

According to this solution, a plurality of manners of determining the valid duration are provided.

According to a third aspect, a communication apparatus is provided, to implement the foregoing method. The communication apparatus may be the terminal device in the first aspect, an apparatus including the terminal device, or an apparatus included in the terminal device, such as a chip. Alternatively, the communication apparatus may be the network device in the second aspect, an apparatus including the network device, or an apparatus included in the network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing function.

According to a fourth aspect, a communication apparatus is provided, including a processor. The processor is configured to execute instructions stored in a memory, and when the processor executes the instructions, the communication apparatus performs the method in any one of the foregoing aspects. The communication apparatus may be the terminal device in the first aspect, an apparatus including the terminal device, or an apparatus included in the terminal device, such as a chip. Alternatively, the communication apparatus may be the network device in the second aspect, an apparatus including the network device, or an apparatus included in the network device.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to a fifth aspect, a communication apparatus is provided, including a processor and an interface circuit. The interface circuit is configured to communicate with a module other than the communication apparatus. The processor is configured to perform the method in any one of the foregoing aspects by using a logic circuit or by running a computer program or instructions. The communication apparatus may be the terminal device in the first aspect, an apparatus including the terminal device, or an apparatus included in the terminal device, such as a chip. Alternatively, the communication apparatus may be the network device in the second aspect, an apparatus including the network device, or an apparatus included in the network device.

Alternatively, the interface circuit may be a code/data read/write interface circuit, and the interface circuit is configured to receive computer-executable instructions (the computer-executable instructions are stored in a memory, and may be read from the memory directly or via another component) and transmit the computer-executable instructions to the processor, so that the processor runs the computer-executable instructions to perform the method according to any one of the foregoing aspects.

In some possible designs, the communication apparatus may be a chip or a chip system.

According to a sixth aspect, a computer-readable storage medium is provided. The computer-readable storage medium stores instructions, and when the instructions are run on a communication apparatus, the communication apparatus is enabled to perform the method in any one of the foregoing aspects. The communication apparatus may be the terminal device in the first aspect, an apparatus including the terminal device, or an apparatus included in the terminal device, such as a chip. Alternatively, the communication apparatus may be the network device in the second aspect, an apparatus including the network device, or an apparatus included in the network device.

According to a seventh aspect, a computer program product including instructions is provided. When the computer program product runs on a communication apparatus, the communication apparatus is enabled to perform the method in any one of the foregoing aspects. The communication apparatus may be the terminal device in the first aspect, an apparatus including the terminal device, or an apparatus included in the terminal device, such as a chip. Alternatively, the communication apparatus may be the network device in the second aspect, an apparatus including the network device, or an apparatus included in the network device.

According to an eighth aspect, a communication apparatus (for example, the communication apparatus may be a chip or a chip system) is provided. The communication apparatus includes a processor, configured to implement the function in any one of the foregoing aspects. In a possible design, the communication apparatus further includes a memory, and the memory is configured to store necessary program instructions and data. When being a chip system, the communication apparatus may include a chip, or may include a chip and another discrete component.

For technical effects brought by any design manner in the third aspect to the eighth aspect, refer to the technical effects brought by different design manners in the first aspect and the second aspect. Details are not described herein again.

According to a ninth aspect, a communication system is provided. The communication system includes a terminal device and a network device. The terminal device is configured to perform the method in the first aspect. The network device is configured to perform the method in the second aspect.

## BRIEF DESCRIPTION OF DRAWINGS

FIG. 1 is a diagram of a random access configuration period according to an embodiment of this application;

FIG. 2 is a diagram of a structure of a communication system according to an embodiment of this application;

FIG. 3 is a diagram of an architecture of an NTN system according to an embodiment of this application;

FIG. 4 is a diagram of structures of a network device and a terminal device according to an embodiment of this application;

FIG. 5 is a diagram of another structure of a terminal device according to an embodiment of this application;

FIG. 6 is an interaction diagram of a random access method according to an embodiment of this application;

FIG. 7 is an interaction diagram 1 of mapping an SSB to an RO according to an embodiment of this application;

FIG. 8 is an interaction diagram 2 of mapping an SSB to an RO according to an embodiment of this application;

FIG. 9 is an interaction diagram 3 of mapping an SSB to an RO according to an embodiment of this application;

FIG. 10 is an interaction diagram 4 of mapping an SSB to an RO according to an embodiment of this application;

FIG. 11 is an interaction diagram of another random access method according to an embodiment of this application;

FIG. 12 is a diagram of a structure of a communication apparatus according to an embodiment of this application; and

FIG. 13 is a diagram of a structure of another communication apparatus according to an embodiment of this application.

## DESCRIPTION OF EMBODIMENTS

For ease of understanding the technical solutions in embodiments of this application, the following first briefly describes technologies or terms related to this application.

1. Non-terrestrial communication network (non-terrestrial network, NTN)

To support wider service coverage, a network device may need to provide a network service for a larger communication area. To achieve this goal, an NTN system is currently researched. In the NTN system, a satellite may be used as an access network device (for example, a base station), to provide a network service for an area (for example, an area such as an ocean or a forest) that cannot be completely covered by a terrestrial mobile communication system. The NTN system includes nodes such as the satellite, a high-altitude platform, and an uncrewed aerial vehicle.

In the NTN system, the satellite is used as the access network device, and needs to send a beam in a coverage area, so that a terminal device completes random access (random access, RA) to access the NTN system. A specific random access process of the terminal device is described below. Because a satellite usually has a large coverage area, a single satellite needs to send a large quantity of beams to complete full coverage under a given link budget and system resource. In addition, due to high-speed movement of the satellite, coverage and service time of each beam sent by the single satellite are limited. Therefore, an access delay of the terminal device in the random access process needs to be considered, to improve an access opportunity of the terminal device, and ensure service coverage.

2. Random access

A random access process is generally a process starts when a terminal device sends a random access preamble (random access preamble) (which may also be referred to as a preamble) to attempt to access a network and ends before a basic signaling connection is established between the terminal device and the network device.

Currently, before the terminal device initiates random access, the network device may periodically broadcast different synchronization signal blocks in different communication areas, and distinguish different SSBs by using index numbers (indexes) of the SSBs. Generally, different SSB indexes represent downlink synchronization signals in different beam (beam) directions, and cover and serve different areas. A period in which the network device broadcasts an SSB may be referred to as an SSB period. In addition, the network device may configure a random access configuration period (physical random access channel configuration period, PRACH configuration period) (which may also be referred to as a physical random access channel configuration period, PRACH configuration period for short), configure a specific quantity of ROs in the PRACH configuration period (a specific implementation of configuring the PRACH configuration period is described below, and is not described herein), and associatively map the broadcast SSBs to the ROs (a specific rule for associatively mapping the SSBs to the ROs is described below, and is not described herein again). A period formed by one or more PRACH configuration periods where ROs to which the SSBs are mapped are located is referred to as an association period (association period) or a mapping period (mapping period). Mapping of the SSBs to the ROs in the association period starts from a frame number 0. The association period uses a minimum value of a quantity of PRACH configuration periods in an association period configuration table, and is required to satisfy at least one complete mapping between all the configured SSBs and the ROs in the association period. In one mapping, if there are some ROs to which no SSBs are mapped after mapping of SSBs to ROs is performed for an integer quantity of loops, no mapping relationships will be established between these ROs and SSBs.

Associatively mapping the SSBs to the ROs may also be understood as associatively mapping the indexes of the SSBs to the ROs.

In embodiments of this application, associatively mapping an SSB to an RO may also be referred to as establishing an association relationship between the SSB and the RO, mapping the SSB to the RO, establishing a mapping relationship between the SSB and the RO, or the like. The association/mapping relationship between the SSB and the RO may also be referred to as a correspondence between the SSB and the RO, or the like.

The following uses an example in which the foregoing association period configuration table is the following Table 1 to describe an example of determining the association period.

Table 1

| Duration of the PRACH configuration period (ms) | Association period (quantity of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

In Table 1, the association period (quantity of PRACH configuration periods) is a quantity of PRACH configuration periods included in the association period. For example, if the PRACH configuration period is 10 ms, it can be learned from Table 1 that the quantity of PRACH configuration periods included in the association period may be valued in {1, 2, 4, 8, 16}. The network device determines that when the quantity of PRACH configuration periods included in the association period is 1 or 2, not all SSBs in the SSB period can be mapped to ROs in the association period once, and when the quantity of PRACH configuration periods included in the association period is 4, all the SSBs in the SSB period may be mapped to ROs in the association period once. Therefore, the quantity of PRACH configuration periods included in the association period is 4, that is, duration of the association period is 40 ms.

The network device may include, in a system message, indication information indicating an index of an SSB sent in the SSB period (that is, an SSB actually sent in the SSB period). After receiving one or more SSBs broadcast by the network device, the terminal device may select one SSB and complete timing synchronization. The terminal device may determine a time-frequency location of system information based on information in the selected SSB, for example, determine a time-frequency location of a system information block 1 (System Information Block 1, SIB 1), and parse the system message at the corresponding time-frequency location, to obtain random access related configuration information. Then, the terminal device establishes, based on the random access related configuration information, a mapping relationship between an SSB sent by the network device in the SSB period and an RO, to send a random access preamble on a corresponding RO based on an index of the selected SSB. The network device may determine, by using the received preamble and the corresponding RO, an area in which the terminal device is located, and send a random access response (random access response, RAR) to the terminal device. If the terminal device may receive the corresponding RAR in a RAR window, the terminal device may establish a connection to the network device, to complete a subsequent random access procedure; or if the terminal device does not receive the corresponding RAR in a RAR window, it is considered that random access fails, and the terminal device sends the preamble on the corresponding RO again.

Particularly, in an NTN system, in addition to obtaining the SIB 1, the terminal device may further obtain a system information block 19 (system information block 19, SIB 19), to obtain ephemeris information of a satellite, and further send the preamble on the corresponding RO based on the SIB 1 and the ephemeris information of the satellite.

Based on a difference between steps of information exchange between the terminal device and the network device in the foregoing random access process, random access may be classified as 4-step random access (4-step random access channel, 4-step RACH) and 2-step random access (2-step random access channel, 2-step RACH). 2-step random access combines steps of information exchange in 4-step random access, and reduces steps and time required in a random access process of 4-step random access.

3. PRACH configuration period

In an NR system, a PRACH configuration period is in a unit of a system frame, or referred to as a radio frame (frame). Currently, it is specified that one system frame is 10 ms.

A network device may configure the PRACH configuration period and an RO in the PRACH configuration period by using corresponding configuration information. The following describes, with reference to a random access configuration table in frequency division duplex (frequency division duplex, FDD) in a frequency band 1 (Frequency range 1, FR1), that is, Table 2, how to configure the PRACH configuration period and how to configure the RO in the PRACH configuration period.

Table 2

| PRACH configuration index (PRACH configuration index) | Preamble format (preamble format) | $n_{SFN} \bmod x = y$ | | Subframe number (Subframe number) | $l_0$ | $n_{slot}^{RA}$ | $N_t^{RA,slot}$ | $N_{dur}^{RA}$ |
|---|---|---|---|---|---|---|---|---|
| | | $x$ | $y$ | | | | | |
| 217 | B4 | 1 | 0 | 0, 1, 2, 3, 4, 5, 6, 7, 8, and 9 | 0 | 2 | 1 | 12 |
| 251 | C2 | 1 | 0 | 2 and 7 | 0 | 2 | 2 | 6 |

The following describes each parameter in Table 2.

In Table 2, the PRACH configuration index indicates an index of a PRACH configuration.

The preamble format indicates a preamble format of a preamble on the RO in the PRACH configuration period.

$n_{SFN} \bmod x = y$ indicates a quantity of system frames occupied by the PRACH configuration period, and is valued in a range of {1, 2, 4, 8, 16}. In other words, duration of the PRACH configuration period is determined by $x, y$.

The subframe number indicates a subframe number of a subframe in which there is an RO in the PRACH configuration period.

$l_0$ indicates a location of a start symbol (symbol) of the RO in the PRACH configuration period. $n_{slot}^{RA}$ indicates a quantity of slots (slots) in which there is an RO in one subframe in the PRACH configuration period, where a slot in which there is an RO may be referred to as a PRACH slot. $N_t^{RA,slot}$ indicates a quantity of ROs in one PRACH slot. $N_{dur}^{RA}$ indicates a quantity of symbols occupied by one RO.

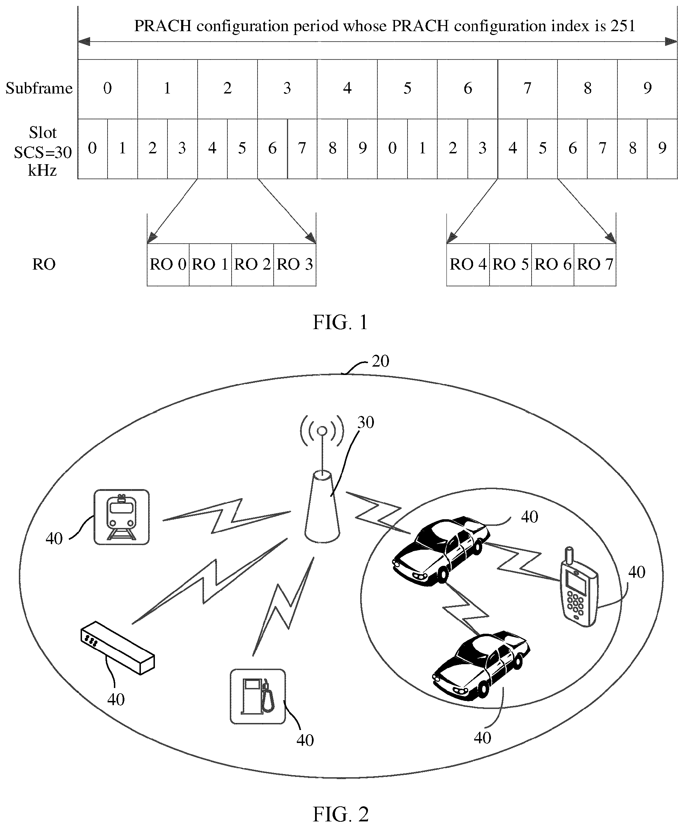

An example in which the PRACH configuration index (index) in Table 2 is 251 is used for description. In a PRACH configuration period whose index is 251, RO distribution is shown in FIG. 1. Specifically, the preamble format is C2, that is, in the PRACH configuration period, a preamble format of a preamble on an RO is C2. x=1 and y=0 are substituted into $n_{SFN}$mod$x = y$, and a value of $n_{SFN}$ that satisfies the formula is 1, that is, the PRACH configuration period occupies one system frame. The subframe number is 2 and 7, that is, subframe numbers in which there is an RO in the PRACH configuration period are 2 and 7. $n_{slot}^{RA}=2$, that is, in the PRACH configuration period, a subframe in which there is an RO includes two PRACH slots, and a subcarrier spacing (Sub-Carrier Spacing, SCS) of the RACH slot is 30 kHz, so that one subframe in which there is an RO corresponds to two PRACH slots. $N_t^{RA,slot}=2$, that is, in the PRACH configuration period, two ROs may be configured in each RACH slot. $l_0$=0, that is, in each RACH slot in the PRACH configuration period, a start symbol of the RO is a symbol 0. $N_{dur}^{RA}=6$, that is, each RO occupies six symbols. In conclusion, eight ROs, that is, an RO 0, an RO 1, an RO 2, an RO 3, an RO 4, an RO 5, an RO 6, and an RO 7 may be configured in the PRACH configuration period, and each RO occupies six symbols.

Optionally, in the PRACH configuration period, each RO may have a corresponding index (index). Specifically, the index of the RO in the PRACH configuration period may be determined in ascending order from a 1st RO in a 1st PRACH configuration period in the association period. For example, the PRACH configuration period in the association period is configured based on configuration information corresponding to the PRACH configuration index index=251 in Table 2. Indexes of eight ROs in the 1st PRACH configuration period in the association period may be 0, 1, 2, 3, 4, 5, 6, and 7, indexes of eight ROs in a 2nd PRACH configuration period in the association period may be 8, 9, 10, 11, 12, 13, 14, and 15, and indexes of ROs in a subsequent PRACH configuration period may be deduced by analogy.

In addition, according to a current protocol, a quantity of subframes including an RO that can be configured in a PRACH configuration period of a single system frame in the FR1 frequency band is 1, 2, 3, 5, or 10, and the subframes including an RO are scattered as much as possible.

4. SSB-RO mapping rule (or referred to as an SSB-RO association rule, an SSB-RO associative mapping rule, or the like)

The SSB-RO mapping rule is used to associatively map an SSB to an RO in a PRACH configuration period, to establish an association relationship, so that after receiving a preamble on a corresponding RO, a network device may determine, based on an index of an SSB associated with the RO, the SSB, and determine a beam used to send a downlink RAR.

Currently, the network device may indicate the SSB-RO mapping rule by using an ssb-perRACH-OccasionAndCB-PreamblesPerSSB field in random access related configuration information in a system message.

Specifically, the ssb-perRACH-OccasionAndCB-PreamblesPerSSB field may be used to configure:
a quantity N of SSBs corresponding to each RO, where N is valued in a range of {1/8, 1/4,1/2, 1, 2, 4, 6, 16}.

Based on different values of the quantity N of SSBs corresponding to each RO, there are the following different cases for mapping of SSBs to ROs:

(1) N<1, and one SSB is mapped to a plurality of ROs;
(2) N=1, and one SSB is mapped to one RO; and
(3) N>1, and a plurality of SSBs are mapped to one RO.

When mapping SSBs to ROs based on the SSB-RO mapping rule, the network device or a terminal device may sequentially map SSBs sent in an SSB period to ROs based on a value relationship between indexes of the SSBs and a value relationship between indexes of the ROs in the PRACH configuration period.

Specifically, the network device or the terminal device may map the SSBs to the ROs in the following order: (1) an ascending order of preamble indexes of contention based preambles (contention based preambles, CB Preambles) in the ROs; (2) an ascending order of frequency domain indexes when random access channel (random access channel, RACH) frequency division multiplexing (Frequency division multiplexing, FDM) is configured (there are a plurality of ROs in frequency domain); (3) an ascending order of indexes, in a PRACH slot, of a plurality of ROs configured in the PRACH slot; and (4) an ascending order of indexes of PRACH slots when a plurality of PRACH slots are configured.

The foregoing describes related technologies in a current random access solution. However, according to the current random access solution, random access efficiency of the terminal device is low, and requirements of some communication systems may not be met. For example, currently, a start time domain position of an association period is a start time domain position of a system frame whose frame number is 0. As a result, after selecting an SSB, the terminal device may not be able to send a preamble in time on an RO that is associated with the SSB and that is in a current mapping period, and needs to wait for a next mapping period to send the preamble on an RO in the next mapping period, which increases a service delay. To improve the random access efficiency of the terminal device, embodiments of this application provide a random access method, an apparatus, and a system.

The following describes the technical solutions in embodiments of this application with reference to the accompanying drawings in embodiments of this application. Unless otherwise specified, "/" in descriptions of this application represents an "or" relationship between associated objects. For example, A/B may represent A or B. In this application, "and/or" is merely an association relationship for describing the associated objects, and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically a same function and effect. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The random access method provided in embodiments of this application may be applicable to various communication systems. For example, the random access method provided in embodiments of this application may be applied to a long term evolution (long term evolution, LTE) system, an NR system, a 5G system, an NTN system, or another new similar future-oriented communication system, for example, a sixth generation (sixth generation, 6G) system. This is not specifically limited in embodiments of this application. In addition, the terms "system" and "network" are interchangeable.

FIG. 2 shows a communication system 20 according to an embodiment of this application. The communication system 20 includes at least one network device 30 and at least one terminal device 40. The terminal device 40 may communicate with the network device 30 in a wireless manner. Optionally, different network devices 30 may communicate with each other. Optionally, different terminal devices 40 may communicate with each other. The network device 30 and/or the terminal device 40 may be at invariable locations, or may be movable.

It should be noted that FIG. 2 is merely a diagram. Although not shown, another network device may further be included in the communication system 20. For example, the communication system 20 may further include one or more of a core network (core network, CN) device, a wireless relay device, and a wireless backhaul device. This is not specifically limited herein. The network device may be connected to the core network device in a wireless or wired manner. The core network device and the network device 30 may be different independent physical devices, functions of the core network device and logical functions of the network device 30 may be integrated into a same physical device, or some functions of the core network device and some functions of the network device 30 may be integrated into one physical device. This is not specifically limited in this embodiment of this application.

For example, the network device 30 shown in FIG. 2 interacts with any terminal device 40. In the random access method provided in embodiments of this application, the terminal device receives a target synchronization signal block in a synchronization signal block period from the network device. Then, the terminal device receives first configuration information from the network device based on the target synchronization signal block, where the first configuration information includes a first offset value, the first offset value indicates interval duration between a start time domain position of a first association period and a start time domain position of a reference system frame, and the first association period is a 1st association period in one or more association periods corresponding to the synchronization signal block period. Then, the terminal device determines, based on the first configuration information and the target synchronization signal block, a random access occasion that is associated with the target synchronization signal block and that is in the one or more association periods. The terminal device sends a preamble to the network device on one random access occasion in the random access occasion associated with the target synchronization signal block.

A specific implementation and technical effects of this solution are described in detail in subsequent method embodiments, and details are not described herein again.

Optionally, the communication system 20 shown in FIG. 2 may be used in a network architecture of an NTN system. This is not specifically limited in this embodiment of this application.

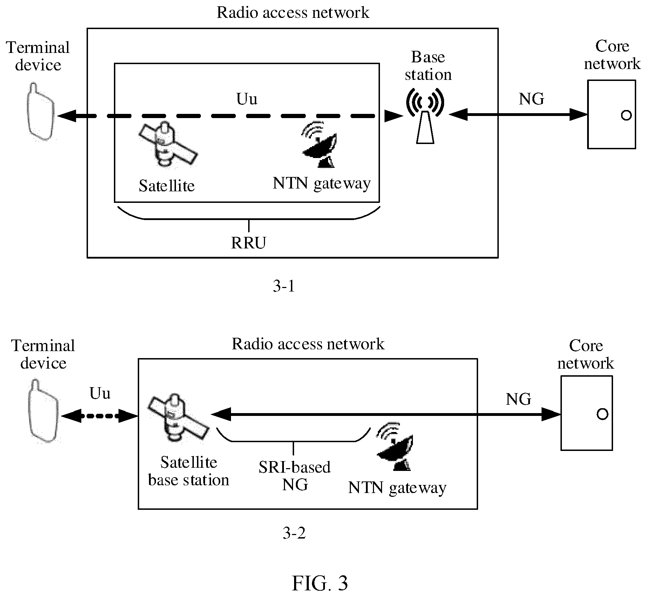

For example, FIG. 3 is a diagram of architectures of two NTN systems applicable to the communication system 20. In a network architecture of an NTN shown in 3-1 in FIG. 3, the terminal device communicates with a terrestrial base station through a universal terrestrial radio access network-user (universal terrestrial radio access network-user, Uu) interface. A satellite may implement transparent payload transmission between a user and the terrestrial base station. The satellite and an NTN gateway may be considered as remote radio units (remote radio units, RRUs) of the terrestrial base station, and implement transparent forwarding of a signal. In other words, the satellite supports only functions such as radio frequency filtering, frequency conversion, and amplification, with a signal waveform remaining unchanged. The terrestrial base station and a core network may communicate with each other through a next generation network (next generation, NG) interface, to exchange non-access stratum (non-access stratum, NAS) signaling of the core network, service data of the terminal device, and the like.

In a network architecture of another NTN shown in 3-2 in FIG. 3, a satellite has some or all functions of an access network device, may be referred to as a satellite base station, and may provide a radio access service, and schedule a radio resource for the terminal device that accesses the network via the satellite base station. The satellite base station communicates with the terminal device through a Uu interface. The satellite base station and a core network may communicate with each other through an NG interface. The satellite base station and the core network may exchange, through the NG interface, NAS signaling and service data of the terminal device. A satellite radio interface (satellite radio interface, SRI) is a feeder link between an NTN gateway and the satellite. The SRI interface may be used as a part of the NG interface to implement communication and interaction between the satellite and the core network.

Optionally, the network device in embodiments of this application is a device that connects the terminal device and a wireless network. The network device in embodiments of this application may include base stations (base stations) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that undertakes a base station function in device-to-device (Device-to-Device, D2D), vehicle-to-everything (vehicle-to-everything, V2X), or machine-to-machine (machine-to-machine, M2M) communication, or the like; may be a network device in an NTN communication system, in other words, may be deployed on a high-altitude platform or a satellite; or may be a module or a unit that completes some base station functions, for example, may be a central unit (central unit, CU) in a cloud access network (cloud radio access network, C-RAN) system, or may be a distributed unit (distributed unit, DU). A specific technology and a specific device form that are used by the network device are not limited in embodiments of this application. All or some functions of the network device may alternatively be implemented by using a software function running on hardware, or may be implemented by using an instantiated virtualization function on a platform (for example, a cloud platform). In this application, unless otherwise specified, the network device is a radio access network (radio access network, RAN) device.

Optionally, the terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, personal digital assistant (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form used by the terminal device are not limited in embodiments of this application. All or some functions of the terminal device may alternatively be implemented by using a software function running on hardware, or may be implemented by using an instantiated virtualization function on a platform (for example, a cloud platform).

Optionally, in embodiments of this application, the network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited in embodiments of this application.

Optionally, the network device and the terminal device in embodiments of this application may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device and the terminal device in embodiments of this application may also be referred to as communication apparatuses, and each may be a general-purpose device or a dedicated device. This is not specifically limited in embodiments of this application.

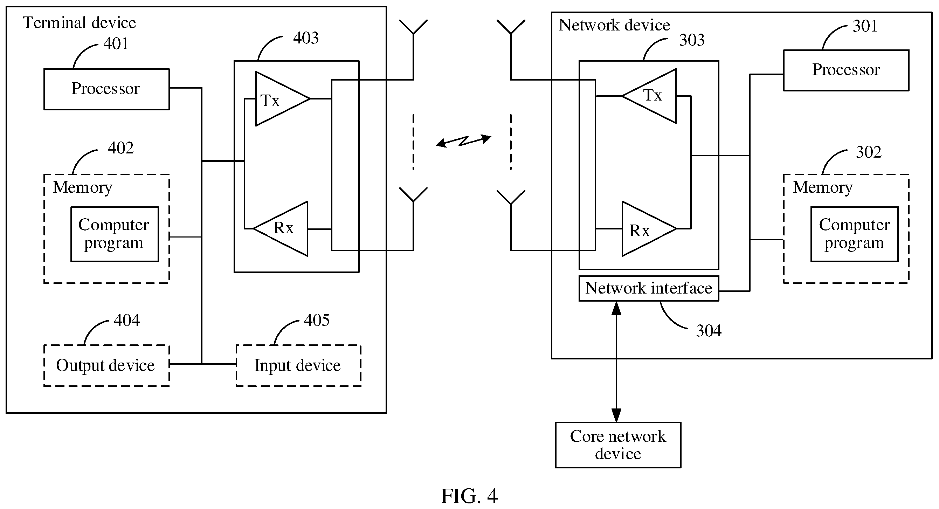

Optionally, FIG. 4 is a diagram of structures of a network device and a terminal device according to an embodiment of this application. The terminal device 40 in FIG. 2 may use a structure of the terminal device shown in FIG. 4, and the network device 30 in FIG. 2 may use a structure of the network device shown in FIG. 4.

The terminal device includes at least one processor 401 and at least one transceiver 403. Optionally, the terminal device may further include at least one memory 402, at least one output device 404, or at least one input device 405.

The processor 401, the memory 402, and the transceiver 403 are connected through a communication line. The communication line may include a path for information transmission between the foregoing components.

The processor 401 may be a general-purpose central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor. During specific implementation, in an embodiment, the processor 401 may alternatively include a plurality of CPUs, and the processor 401 may be a single-core processor or a multi-core processor. The processor herein may be one or more devices, circuits, or processing cores configured to process data.

The memory 402 may be an apparatus with a storage function, for example, may be a read-only memory (read-only memory, ROM) or another type of static storage device that can store static information and instructions, a random access memory (random access memory, RAM) or another type of dynamic storage device that can store information and instructions, a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or other optical disk storage, optical disk storage (including a compact disc, a laser disc, an optical disc, a digital versatile disc, a Bluray disc, and the like), a magnetic disk storage medium or another magnetic storage device, or any other medium that can be configured to carry or store desired program code in a form of an instruction or a data structure and that can be accessed by a computer, but is not limited thereto. The memory 402 may exist independently, and is connected to the processor 401 through the communication line. Alternatively, the memory 402 and the processor 401 may be integrated together.

The memory 402 is configured to store computer-executable instructions for performing the solutions of this application, and the processor 401 controls the performing. Specifically, the processor 401 is configured to execute the computer-executable instructions stored in the memory 402, to implement the random access method in embodiments of this application.

Alternatively, optionally, in this embodiment of this application, the processor 401 may perform a processing-related function in the random access method provided in the following embodiment of this application, and the transceiver 403 is responsible for communicating with another device or a communication network. This is not specifically limited in this embodiment of this application.

Optionally, the computer-executable instructions in this embodiment of this application may also be referred to as application program code or computer program code. This is not specifically limited in this embodiment of this application.

The transceiver 403 may be any apparatus such as a transceiver, and is configured to communicate with the another device or the communication network, for example, an Ethernet, a radio access network (RAN), or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, or a projector (projector).

The input device 405 communicates with the processor 401, and may receive a user input in a plurality of manners. For example, the input device 405 may be a mouse, a keyboard, a touchscreen device, or a sensor device.

The network device includes at least one processor 301, at least one transceiver 303, and at least one network interface 304. Optionally, the network device may further include at least one memory 302. The processor 301, the memory 302, the transceiver 303, and the network interface 304 are connected through a communication line. The network interface 304 is configured to be connected to a core network device through a link (for example, an S1 interface), or be connected to a network interface of another network device through a wired or wireless link (for example, an X2 interface) (where the connection is not shown in FIG. 4). This is not specifically limited in this embodiment of this application. In addition, for related descriptions of the processor 301, the memory 302, and the transceiver 303, refer to the descriptions of the processor 401, the memory 402, and the transceiver 403 of the terminal device. Details are not described herein again.

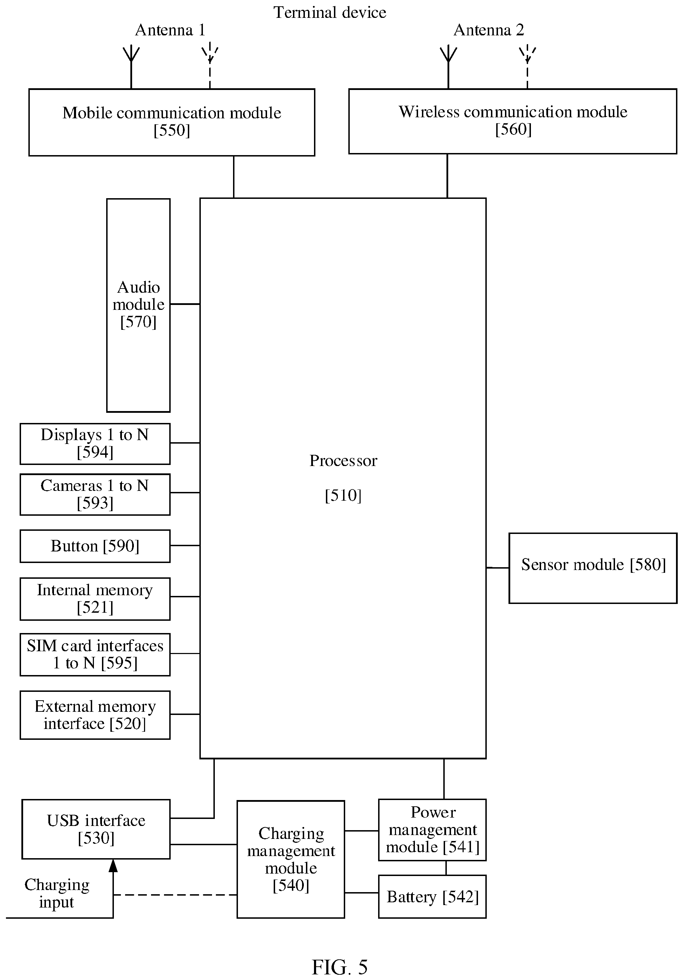

With reference to the diagram of the structure of the terminal device shown in FIG. 4, for example, FIG. 5 shows a specific structural form of the terminal device according to an embodiment of this application.

In some embodiments, a function of the processor 401 in FIG. 4 may be implemented by using a processor 510 in FIG. 5.

In some embodiments, a function of the transceiver 403 in FIG. 4 may be implemented by using an antenna 1, an antenna 2, a mobile communication module 550, a wireless communication module 560, and the like in FIG. 5. The mobile communication module 550 may provide a solution that is applied to the terminal device and that includes a wireless communication technology such as LTE, NR, or future mobile communication. The wireless communication module 560 may provide a solution that is applied to the terminal device and that includes a wireless communication technology such as a WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), or infrared. In some embodiments, the antenna 1 of the terminal device is coupled to the mobile communication module 550, and the antenna 2 is coupled to the wireless communication module 560, so that the terminal device can communicate with a network and another device by using a wireless communication technology.

In some embodiments, a function of the memory 402 in FIG. 4 may be implemented by using an internal memory 521 in FIG. 5, an external memory connected to an external memory interface 520, or the like.

In some embodiments, a function of the output device 404 in FIG. 4 may be implemented by using a display 594 in FIG. 5.

In some embodiments, a function of the input device 405 in FIG. 4 may be implemented by using a mouse, a keyboard, a touchscreen device, or a sensor module 580 in FIG. 5.

In some embodiments, as shown in FIG. 5, the terminal device may further include one or more of an audio module 570, a camera 593, a button 590, a subscriber identity module (subscriber identity module, SIM) card interface 595, a universal serial bus (universal serial bus, USB) interface 530, a charging management module 540, a power management module 541, and a battery 542.

It may be understood that the structure shown in FIG. 5 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

With reference to FIG. 1 to FIG. 5, the following describes the random access method provided in embodiments of this application in detail by using an example in which the network device 30 shown in FIG. 2 interacts with any terminal device 40.

It should be noted that names of messages between network elements, names of parameters in messages, or the like in the following embodiments of this application are merely examples, and there may be other names in specific implementation. This is not specifically limited in embodiments of this application.

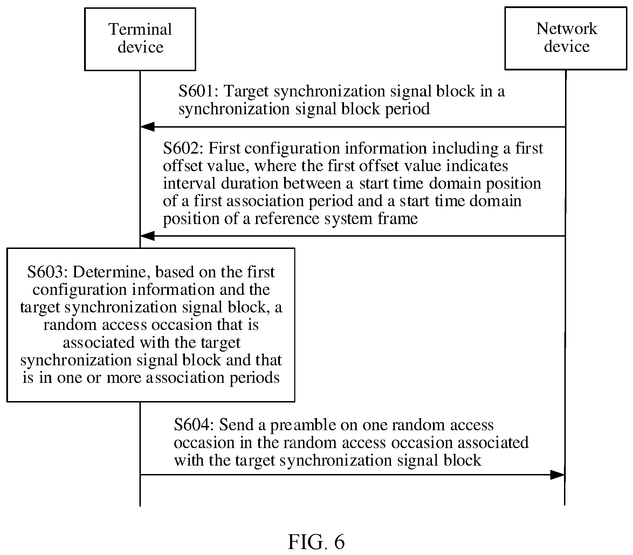

FIG. 6 shows a random access method according to an embodiment of this application. In FIG. 6, the method is described by using an example in which a network device and a terminal device are execution bodies of an interaction example. However, the execution bodies of the interaction example are not limited in this application. For example, the network device in FIG. 6 may alternatively be a chip, a chip system, or a processor that supports the network device in implementing the method, or may be a logical module or software that can implement all or some functions of the network device. The terminal device in FIG. 6 may alternatively be a chip, a chip system, or a processor that supports the terminal device in implementing the method, or may be a logical module or software that can implement all or some functions of the terminal device. The random access method includes S601 to S604.

S601: The terminal device receives a target synchronization signal block in a synchronization signal block period from the network device.

S602: The terminal device receives first configuration information from the network device based on the target synchronization signal block, where the first configuration information includes a first offset value, the first offset value indicates interval duration between a start time domain position of a first association period and a start time domain position of a reference system frame, and the first association period is a 1st association period in one or more association periods corresponding to the synchronization signal block period.

S603: The terminal device determines, based on the first configuration information and the target synchronization signal block, a random access occasion that is associated with the target synchronization signal block and that is in the one or more association periods.

S604: The terminal device sends a preamble to the network device on one random access occasion in the random access occasion associated with the target synchronization signal block.

Currently, the association period needs to start from a system frame whose frame number is 0. After the terminal device receives an SSB, for some factors, for example, the terminal device is located in a scenario (for example, an NTN system) with a large quantity of beams and limited resources, or for example, a bidirectional transmission delay and a processing delay of the terminal device, the terminal device may not be able to send the preamble in time on a corresponding RO in a current association period. For example, the terminal device determines that the preamble needs to be sent on an RO whose index is 0, but an RO whose index is 0 in the current association period has passed, and the terminal device needs to wait for an RO whose index is 0 in a next association period to send the preamble. This increases a random access delay. According to the random access method provided in this embodiment of this application, the terminal device may determine, based on the first offset value, an association period whose start time domain position is after the reference system frame. In other words, in this embodiment of this application, the start time domain position of the association period may have a specific offset relative to the reference system frame. Therefore, a probability that the terminal device can send the preamble on the RO in the current association period can be increased, the random access delay of the terminal device can be reduced, and random access efficiency of the terminal device can be improved.

It should be noted that in this embodiment of this application, because an RO needs to be associated with an SSB based on an SSB-RO mapping rule, for ease of intuitive understanding, a number that is the same as an index of the SSB may be marked for the RO corresponding to the SSB. For example, for an RO associated with an SSB whose index is n, a number of the RO is n, and the RO may be represented as an RO n. The number of the RO is determined based on a mapping relationship between the RO and the SSB, and is not an index of the RO in a PRACH configuration period. However, in some cases, a value of the number of the RO may be the same as a value of the index of the RO in the PRACH configuration period.

For example, if one SSB corresponds to three ROs in the association period, three ROs corresponding to an SSB 0 in one association period are an RO 0, an RO 0, and an RO 0. An index of the 1st RO 0 in the PRACH configuration period is 0, an index of the 2nd RO 0 in the PRACH configuration period is 1, and an index of the 3rd RO 0 is 2.

For S601, the network device broadcasts, in the SSB period, one or more SSBs to the terminal device in a specific communication area. After receiving the one or more SSBs broadcast by the network device, the terminal device selects one target SSB from the one or more SSBs. The terminal device may receive all the SSBs broadcast by the network device in the SSB period, or may receive some SSBs broadcast by the network device in the SSB period.

Optionally, the network device may include, in a system message, indication information indicating an index of the SSB sent in the SSB period.

Optionally, the terminal device may select the target SSB according to a preset rule. For example, the terminal device may select an SSB with best signal quality from the one or more received SSBs as the target SSB.

Optionally, a quantity of SSBs that the network device needs to send in the SSB period may be determined by the network device based on a requirement of a communication system or a service. For example, in the NTN system, a satellite has a wide coverage area, and the network device needs to send a large quantity of beams. In this case, a quantity of SSBs that the network device needs to send in one SSB period may be extended to 128 or 256.

Optionally, when sending the SSBs in the SSB period, the network device may send the SSBs by group by using eight SSBs as a group. For example, when the quantity of SSBs that need to be sent in one SSB period is 128, the network device may send eight SSBs every two system frames (20 ms), with 32 groups required in total. Further, when sending the SSBs by group, the network device may send one group of SSBs every two system frames.

For S602, after selecting the target SSB, the terminal device parses the target SSB to obtain an index (index) of the target SSB and a time-frequency location of the first configuration information indicated by the target SSB, to receive the first configuration information from the network device at the corresponding time-frequency location.

Optionally, the first configuration information may be carried in a system message. For example, the first configuration information may be carried in a SIB 1. Further, the time-frequency location that is of the first configuration information and that is obtained by the terminal device may be a time-frequency location of a search space (search space) in which the system message carrying the first configuration information is located.

In S602, the first configuration information includes the first offset value. The first offset value indicates the interval duration between the start time domain position of the first association period and the start time domain position of the reference system frame. The first association period is the 1st association period in the one or more association periods corresponding to the SSB period. The following provides specific descriptions.

All the SSBs included in the SSB period are mapped at least once to ROs in each association period in the one or more corresponding association periods at least once.

The 1st association period in the one or more association periods corresponding to the SSB period is a 1st association period that is in the one or more association periods corresponding to the SSB period and that is after the reference system frame in time domain.

Optionally, the reference system frame may be a system frame predetermined by the network device and the terminal device. Alternatively, the reference system frame may be a system frame set by the network device. In this case, the network device may indicate a frame number of the reference system frame to the terminal device by using the first configuration information. For example, the reference system frame may be a system frame whose frame number is 0.

Optionally, the first offset value may be configured by using a newly defined parameter. Alternatively, the first offset value may be configured by reusing an existing parameter. For example, the first offset value may be configured by using a newly defined parameter *AssociationPeriod-StartFrameOffset-NTN*.

Optionally, a time granularity of the interval duration, indicated by the first offset value, between the start time domain position of the first association period and the start time domain position of the reference system frame may be any time unit such as a system frame, a subframe, a half-frame, a slot, a symbol, a second, a millisecond, or a microsecond.

Further, the first offset value may be a quantity of the time unit such as the system frame, the subframe, the half-frame, the slot, the symbol, the second, the millisecond, or the microsecond. For example, if the first offset value is set to 1 in the first configuration information by using an *AssociationPeriod-StartFrameOffset-NTN ENUMERATED {1 }* parameter, and the time granularity of the first offset value is the system frame, the interval duration, indicated by the first offset value, between the start time domain position of the first association period and the start time domain position of the reference system frame is one system frame. Alternatively, the first offset value may be the interval duration between the start time domain position of the first association period and the start time domain position of the reference system frame. For example, if the first offset value is configured to one system frame by using an *AssociationPeriod-StartFrameOffset-NTN ENUMERATED {rf1 }* parameter, the interval duration, indicated by the first offset value, between the start time domain position of the first association period and the start time domain position of the reference system frame is one system frame. For another example, if the first offset value is set to 10 milliseconds by using an *AssociationPeriod-StartFrameOffset-NTN ENUMERATED {ms10 }* parameter, the interval duration, indicated by the first offset value, between the start time domain position of the first association period and the start time domain position of the reference system frame is 10 milliseconds.

For S603, after obtaining the first offset value, the terminal device may determine the start time domain position of the first association period based on the first offset value.

In a possible implementation, if the reference system frame is the system frame whose frame number is 0, the start time domain position of the first association period may satisfy the following relationship:

$$SFN_{association\ period} = SFN_{reference}(SFN\#0,\ frame\ 0) + RO\_offset; \qquad \text{Formula (0)}$$

In the foregoing formula (0), $SFN_{association\ period}$ represents the start time domain position of the first association period, $SFN_{reference}$ represents the reference system frame, $SFN_{reference}(SFN\#0, frame\ 0)$ represents that a number of the reference system frame is 0, and $RO\_offset$ represents the first offset value.

For example, if the reference system frame is the system frame whose frame number is 0, $RO\_offset$ =2, and the time granularity of $RO\_offset$ is the system frame, $SFN_{association\ period}$=0+2=2, that is, the start time domain position of the first association period is a start time domain position of a system frame whose frame number is 2.

Further, $RO\_offset$ may alternatively be represented by using a plurality of time granularities. For example, if the time granularity of the first offset value is at least one of the symbol, the slot, or the system frame, $RO\_offset$ in the foregoing formula (0) may alternatively be represented as $n * T_{symbol} + m * T_{slot} + k * T_{rf}$, where $T_{symbol}$ represents the symbol, $T_{slot}$ represents the slot, $T_{rf}$ represents the system frame, and n, $m$, and $k$ are 0 or positive integers.

After determining the start time domain position of the first association period, the terminal device may determine one or more association periods corresponding to the SSB period and ROs in the association period in different cases, and then determine, based on the target SSB, an RO that is associated with the target SSB and that is in the association period. The following describes, based on different cases, specific implementations in which the terminal device determines the RO that is associated with the target SSB and that is in the one or more association periods corresponding to the SSB period.

Case 1: The SSB period corresponds to one association period.

In Case 1, the one association period corresponding to the SSB period is the first association period. The first configuration information includes configuration information (referred to as first information) used to configure a PRACH configuration period in the first association period. A specific process in which the terminal device determines an RO in the first association period is as follows.

The terminal device determines a configuration of the PRACH configuration period in the first association period and an RO configuration in the PRACH configuration period based on the first information, and performs the RO configuration from the start time domain position of the first association period. The terminal device maps, according to an SSB-to-RO associative mapping rule, each SSB sent by a network side in the SSB period to a corresponding RO, to establish an association relationship between an SSB and an RO until all the SSBs sent by the network side in the SSB period are mapped to ROs, determines a possible value of the association period based on an association period configuration table, to determine a minimum value, from the possible value as the first association period, satisfying complete mapping of all the SSBs sent by the network side in the SSB period to the ROs, and obtains a mapping relationship between an RO in the first association period and an SSB.

In the process in which the terminal device determines the RO in the first association period, the terminal device may establish the associative mapping relationship between an RO in the first association period and an SSB. Therefore, after determining the RO in the first association period, the terminal device may determine, from the RO in the first association period based on the associative mapping relationship between an RO and an SSB, an RO associated with the target SSB.

The terminal device may obtain, from the system message, the index of the SSB sent by the network device in the SSB period.

For a specific implementation in which the terminal device configures the PRACH configuration period and an RO in the PRACH configuration period based on the first information, refer to an implementation in the conventional technology in which the terminal device configures the PRACH configuration period based on related configuration information. Details are not described herein again.

The SSB-to-RO associative mapping rule may be carried in the system message. The terminal device may obtain the system message under an indication of the target SSB, to obtain the SSB-to-RO associative mapping rule. The SSB-to-RO associative mapping rule may include: mapping one SSB to a plurality of ROs (or associating one SSB with a plurality of ROs), mapping a plurality of SSBs to one RO (or associating a plurality of SSBs with one RO), or mapping one SSB to one RO (or associating one SSB with one RO). This is not limited in this embodiment of this application.

In a possible implementation, when mapping, according to the SSB-to-RO associative mapping rule, each SSB included in the SSB period to an RO in the PRACH configuration period, the terminal device may sequentially map the SSBs to the ROs based on a value relationship between indexes of the SSBs and a value relationship between indexes of the ROs in the PRACH configuration period. For example, there are two SSBs in the SSB period: the SSB 0 (whose index is 0) and an SSB 1 (whose index is 1). The SSB-to-RO associative mapping rule is mapping one SSB to three ROs. The terminal device determines, based on the PRACH configuration period, that there are four ROs in one PRACH configuration period. In this case, from the start time domain position of the first association period, indexes of four ROs in a 1st PRACH configuration period are 0, 1, 2, and 3, and indexes of four ROs in a 2nd PRACH configuration period are 4, 5, 6, and 7. When mapping the SSBs to the ROs, the terminal device first maps the SSB 0 to the ROs based on the indexes of the SSBs, and then maps the SSB 1 to the ROs. When mapping the SSB 0 to the ROs in the 1st PRACH configuration period, the terminal device sequentially maps, based on the indexes of the ROs, the SSB 0 to the three ROs whose indexes are 0, 1, and 2 in the 1st PRACH configuration period, and then maps the SSB 1 to the RO whose index is 3 in the 1st PRACH configuration period and the two ROs whose indexes are 4 and 5 in the 2nd configuration period.

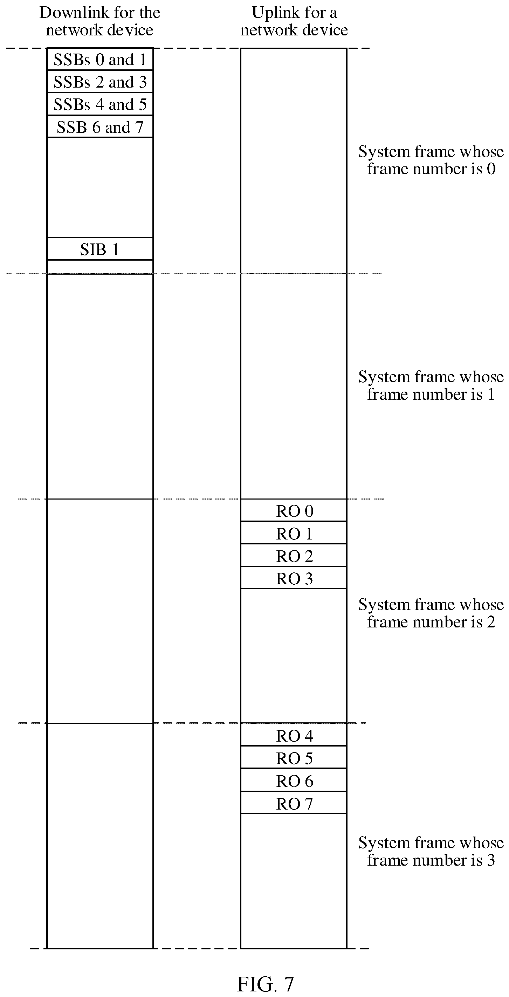

For ease of understanding, the following describes, with reference to an example scenario shown in FIG. 7, how the terminal device determines the association period corresponding to the SSB period and the RO in the association period in Case 1.

It is assumed that the SSB-to-RO mapping rule is associating one SSB with one RO, and the network device sends the SSB 0 (whose index is 0) to an SSB 7 (whose index is 7) in the SSB period, where indexes of the eight SSBs increase sequentially. The network device sends the eight SSBs every two system frames. It is assumed that after receiving one or more of the eight SSBs, the terminal device selects one target SSB from the received SSBs, where the target SSB indicates a time-frequency location of the SIB 1. The terminal device receives the SIB 1 at the corresponding time-frequency location under the indication of the target SSB, obtains the first offset value and the first information, and determines that the SSBs sent in the SSB period are the SSB 0 to the SSB 7. The interval duration, indicated by the first offset value, between the start time domain position of the first association period and the start time domain position of the reference system frame (assumed to be the system frame whose frame number is 0) is two system frames. The terminal device determines, based on the first offset value, that the start time domain position of the first association period is the start time domain position of the system frame whose frame number is 2. In addition, the terminal device determines, based on the first information, that one PRACH configuration period in the first association period occupies one system frame, and that there are four ROs in one PRACH configuration period. The terminal device configures PRACH configuration periods from the system frame whose frame number is 2, and sequentially maps the SSBs to ROs in the PRACH configuration periods based on the indexes of the SSBs, to obtain the following mapping relationship: In FIG. 7, the SSB 0 is associatively mapped to an RO 0, the SSB 1 is associatively mapped to an RO 1, an SSB 2 is associatively mapped to an RO 2, an SSB 3 is associatively mapped to an RO 3, an SSB 4 is associatively mapped to an RO 4, an SSB 5 is associatively mapped to an RO 5, an SSB 6 is associatively mapped to an RO 6, and the SSB 7 is associatively mapped to an RO 7. In other words, eight ROs and two PRACH configuration periods are required for one complete mapping of the SSB 0 to the SSB 7 in the SSB period. In addition, when it is determined, based on the association period configuration table (see Table 1), that duration of the PRACH configuration period is 10 ms, a candidate value of the association period is {1, 2, 4, 8, 16}. Therefore, a minimum value satisfying at least one mapping of all the SSBs is 2, and the first association period is 20 ms. The first association period includes a 1st PRACH configuration period (the system frame whose frame number is 2) and a 2nd PRACH configuration period (a system frame whose frame number is 3), where an end time domain position of the 2nd PRACH configuration period is an end time domain position of the first association period. The ROs that are associated with the SSBs and that are in the first association period are shown in FIG. 7, including the RO 0 to the RO 7. Based on the associative mapping relationship between an RO in the first association period and an SSB, if the target SSB selected by the terminal device is the SSB 0, an RO that is associated with the target SSB and that is in the first association period is the RO 0.

Case 2: The SSB period corresponds to a plurality of association periods.

In Case 2, an SSB-to-RO associative mapping rule is associating one SSB with a plurality of ROs.

In Case 2, the terminal device may determine, in the manner described in the foregoing Case 1, an RO that is associated with the target SSB and that is in the first association period.

In a possible implementation, in addition to determining the RO that is associated with the target SSB and that is in the first association period, the random access method provided in this embodiment of this application further includes the following steps.

S6031: The terminal device receives second configuration information from the network device based on the target SSB, where the second configuration information is used to configure an RO in a second association period, the second configuration information includes a second offset value, and the second offset value indicates interval duration between the second association period and the first association period, or the second offset value indicates interval duration between a start time domain position of the second association period and the start time domain position of the reference system frame.

S6032: The terminal device determines the start time domain position of the second association period based on the second configuration information.

S6033: The terminal device determines the RO in the second association period based on the second configuration information and the start time domain position of the second association period.

S6034: The terminal device determines, based on the target SSB, an RO that is associated with the target SSB and that is in the second association period.

The second association period may be an association period different from the first association period in the plurality of association periods corresponding to the SSB period. For example, the second association period may be a 2nd association period, a 3rd association period, or a subsequent association period in the plurality of association periods. In other words, the terminal device may determine, according to the step of determining an RO that is associated with the target SSB and that is in the second association period, an RO that is associated with the target SSB and that is in an association period different from the first association period in the plurality of association periods corresponding to the SSB period, to determine, with reference to the RO that is associated with the target SSB and that is in the first association period, an RO that is associated with the target SSB and that is in each of the plurality of association periods corresponding to the SSB period.

An RO in each of the plurality of association periods corresponding to the SSB period may be associated with all the SSBs in the SSB period. In other words, all the SSBs in the SSB period may be mapped to the RO in each of the plurality of association periods.

According to a current random access method, a plurality of ROs associated with a single SSB in one SSB period are adjacent in time domain, and if the terminal device does not receive a RAR in a RAR window after sending the preamble on a corresponding RO, the terminal device needs to wait for a next corresponding RO to send the preamble. However, an interval between two adjacent time domain ROs usually exceeds the bidirectional transmission delay, the processing delay of the terminal device, or duration of the RAR window. Therefore, for the terminal device, only one of a plurality of adjacent ROs can be used in one SSB period. It can be learned that in the current random access method, the terminal device cannot be provided with a plurality of access opportunities in one SSB period. However, according to the random access method in this embodiment of this application, one SSB period may correspond to a plurality of association periods. Therefore, a plurality of ROs associated with a same SSB may be distributed in different association periods, and different ROs associated with the same SSB are discontinuous in time domain. In the same SSB period, if the terminal device cannot send the preamble in time on a corresponding RO in a current association period, the terminal device may send the preamble on a corresponding RO in a next association period. In other words, the terminal device has a plurality of access opportunities in one SSB period. Therefore, the random access delay of the terminal device can be reduced, and the random access efficiency of the terminal device can be improved.

In S6031, the terminal device may obtain a time-frequency location of the second configuration information based on information in the target SSB, to receive the second configuration information at the corresponding time-frequency location.

Optionally, the second configuration information may be carried in a system message. For example, the second configuration information may be carried in a SIB 1. Further, the time-frequency location that is of the second configuration information and that is obtained by the terminal device may be a time-frequency location of a search space in which the system message carrying the second configuration information is located.

In S6031, the second configuration information includes the second offset value, and the second offset value indicates the interval duration between the second association period and the first association period. For example, the second offset value may indicate interval duration between the start time domain position of the second association period and the start time domain position of the first association period. Alternatively, the second offset value indicates interval duration between the start time domain position of the second association period and the start time domain position of the reference system frame.

Optionally, the second offset value may be configured by using a newly defined parameter. Alternatively, the second offset value may be configured by reusing an existing parameter. For example, if the second offset value indicates the interval duration between the second association period and the first association period, the second offset value may be configured by using a newly defined parameter *RO_group_Offset-NTN*; or if the second offset value indicates the interval duration between the start time domain position of the second association period and the start time domain position of the reference system frame, the second offset value may be configured by using a newly defined parameter *AssociationPeriod-StartFrameOffset-NTN*.

Optionally, a time granularity of the interval duration indicated by the second offset value may be any time unit such as the system frame, the subframe, the half-frame, the slot, the symbol, the second, the millisecond, or the microsecond. For details, refer to the foregoing descriptions of the first offset value. Details are not described herein again.

In S6032, the terminal device may determine the start time domain position of the second association period based on the second offset value.

Specifically, when the second offset value indicates the interval duration between the second association period and the first association period, the terminal device may determine the start time domain position of the second association period based on a time domain position of the first association period and the interval duration indicated by the second offset value. For example, the second offset value indicates that the interval duration between the start time domain position of the second association period and the start time domain position of the first association period is two system frames, and the start time domain position of the first association period is a start time domain position of a system frame whose frame number is X. In this case, a start time domain position of a system frame whose frame number is X+2 is the start time domain position of the second association period.

Alternatively, when the second offset value indicates the interval duration between the start time domain position of the second association period and the start time domain position of the reference system frame, the terminal device may determine the start time domain position of the second association period based on the start time domain position of the reference system frame and the interval duration indicated by the second offset value. For example, the second offset value indicates that the interval duration between the start time domain position of the second association period and the start time domain position of the reference system frame (assumed to be the system frame whose frame number is 0) is four system frames. In this case, a start time domain position of a system frame whose frame number is 4 is the start time domain position of the second association period.

In S6033, after the terminal device determines the start time domain position of the second association period, the terminal device may determine the RO in the second association period based on the second configuration information and the start time domain position of the second association period.

Specifically, the second configuration information includes information (referred to as second information) used to configure a PRACH configuration period in the second association period. The terminal device may determine a configuration of the PRACH configuration period in the second association period and an RO configuration in the PRACH configuration period based on the second information, and perform the RO configuration from the start time domain position of the second association period. The terminal device maps, according to the SSB-to-RO associative mapping rule, each SSB sent by a network side in the SSB period to a corresponding RO until all the SSBs sent by the network side in the SSB period are mapped to ROs, determines a possible value of the association period based on an association period configuration table, to determine a minimum value, from the possible value as the second association period, satisfying complete mapping of all the SSBs sent by the network side in the SSB period to the ROs, and obtains a mapping relationship between an RO in the second association period and an SSB.

The terminal device may obtain, from the system message, the index of the SSB sent by the network device in the SSB period.

For a specific implementation in which the terminal device configures the PRACH configuration period and the RO in the PRACH configuration period based on the second information, refer to an implementation in the conventional technology in which the terminal device configures the PRACH configuration period based on related configuration information. Details are not described herein again. For a specific implementation in which the terminal device maps, according to the SSB-to-RO associative mapping rule, each SSB included in the SSB period to the RO in the PRACH configuration period, refer to the foregoing descriptions of how the terminal device maps the SSB to the RO in Case 1. Details are not described herein again.

Optionally, the first information may be different from the second information. In other words, the configuration of the PRACH configuration period in the first association period may be different from the configuration of the PRACH configuration period in the second association period. For example, preamble formats corresponding to the ROs in the PRACH configuration periods may be different, locations of the ROs in the PRACH configuration periods may be different, and quantities of ROs in the PRACH configuration periods may be different. In other words, according to the random access method in this embodiment of this application, ROs in different association periods may be independently configured, which is more flexible than using a same set of configurations, and the terminal device may select, based on different cases, an RO in an association period to send the preamble.

It should be noted that in Case 2, neither a quantity of association periods corresponding to the SSB period nor quantities of ROs that are associated with a same SSB and that are in different association periods are limited in this embodiment of this application.

For example, it is assumed that the SSB period includes the SSB 0, an SSB 1, an SSB 2, and an SSB 3, and the SSB-to-RO associative mapping rule is associating one SSB with three ROs. In a possible case, the SSB period may correspond to two association periods: the first association period and the second association period. There are eight ROs in each of the first association period and the second association period. If one SSB may be associated with two ROs in the first association period, the eight ROs in the first association period include an RO 0, an RO 0 (the RO 0 is an RO associated with the SSB 0), an RO 1 (the RO 1 is an RO associated with the SSB 1), an RO 1, an RO 2 (the RO 2 is an RO associated with an SSB 2), an RO 2, an RO 3 (the RO 3 is an RO associated with the SSB 3), and an RO 3. If one SSB may be associated with one RO in the second association period, the eight ROs in the second association period include an RO 0, an RO 1, an RO 2, an RO 3, and other ROs that are not associated with SSBs. Certainly, one SSB may be associated with one RO in the first association period, and associated with two ROs in the second association period. Alternatively, in another possible case of the foregoing example, the SSB period may correspond to two association periods: the first association period and the second association period. There are eight ROs in the first association period and four ROs in the second association period. If one SSB may be associated with two ROs in the first association period, the eight ROs in the first association period include an RO 0, an RO 0, an RO 1, an RO 1, an RO 2, an RO 2, an RO 3, and an RO 3. If one SSB may be associated with one RO in the second association period, the four ROs in the second association period include an RO 0, an RO 1, an RO 2, and an RO 3.

Alternatively, in another possible case of the foregoing example, the SSB period may correspond to three association periods: the first association period, the second association period, and a third association period. There are eight ROs in each of the first association period, the second association period, and the third association period. If one SSB is associated with one RO in the first association period, one RO in the second association period, and one RO in the third association period, the eight ROs in the first association period include an RO 0, an RO 1, an RO 2, an RO 3, and other ROs that are not associated with SSBs, the eight ROs in the second association period include an RO 0, an RO 1, an RO 2, an RO 3, and other ROs that are not associated with SSBs, and the eight ROs in the third association period include an RO 0, an RO 1, an RO 2, an RO 3, and other ROs that are not associated with SSBs.

To reflect an association relationship with an SSB, the RO is represented by a number of the RO in the descriptions of this example. If the RO is represented by an index of the RO in the PRACH configuration period, indexes of ROs corresponding to the SSB 0 are 0 and 1, indexes of ROs corresponding to the SSB 1 are 2 and 3, indexes of ROs corresponding to the SSB 2 are 4 and 5, indexes of ROs corresponding to the SSB 3 are 6 and 7, indexes of ROs corresponding to an SSB 4 are 8 and 9, indexes of ROs corresponding to an SSB 5 are 10 and 11, indexes of ROs corresponding to an SSB 6 are 12 and 13, and indexes of ROs corresponding to an SSB 7 are 14 and 15.

In S6034, after the terminal device determines the RO in the second association period, the terminal device may determine, from the RO in the second association period based on the associative mapping relationship between an RO in the second association period and an SSB, the RO associated with the target SSB.

For ease of understanding, the following describes, with reference to different example scenarios, how the terminal device determines the association periods corresponding to the SSB period and the ROs in the association periods in Case 2.

For example, it is assumed that the SSB-to-RO mapping rule is associating one SSB with two ROs. The network device sends the SSB 0 (whose index is 0) to an SSB 255 (whose index is 255) in the SSB period, where indexes of the 256 SSBs increase sequentially. The network device sends eight SSBs in the SSB period every two system frames. If the terminal device receives the first eight SSBs, that is, the SSB 0 to the SSB 7, in the system frame whose frame number is 0, the terminal device may select one target SSB from the one or more received SSBs, where the target SSB indicates a time-frequency location of the SIB 1. The terminal device receives the SIB 1 at the corresponding time-frequency location under the indication of the target SSB, obtains the first offset value, the second offset value, the first information, and the second information, and determines indexes of the SSBs sent by the network device in the SSB period.

Scenario 1: The interval duration, indicated by the first offset value, between the start time domain position of the first association period and the start time domain position of the reference system frame (assumed to be the system frame whose frame number is 0) is two system frames. The second offset value indicates that the interval duration between the start time domain position of the second association period (it is assumed that the second association period is a 2nd association period in the association periods corresponding to the SSB period) and the start time domain position of the first association period is one system frame.

The terminal device determines, based on the first offset value, that the start time domain position of the first association period is the start time domain position of the system frame whose frame number is 2, and determines, based on the second offset value, that the start time domain position of the second association period is a start time domain position of a system frame whose frame number is 3.

The terminal device determines, based on the first information and the second information, that one PRACH configuration period in the first association period and the second association period occupies one system frame, and that there are eight ROs in one PRACH configuration period.

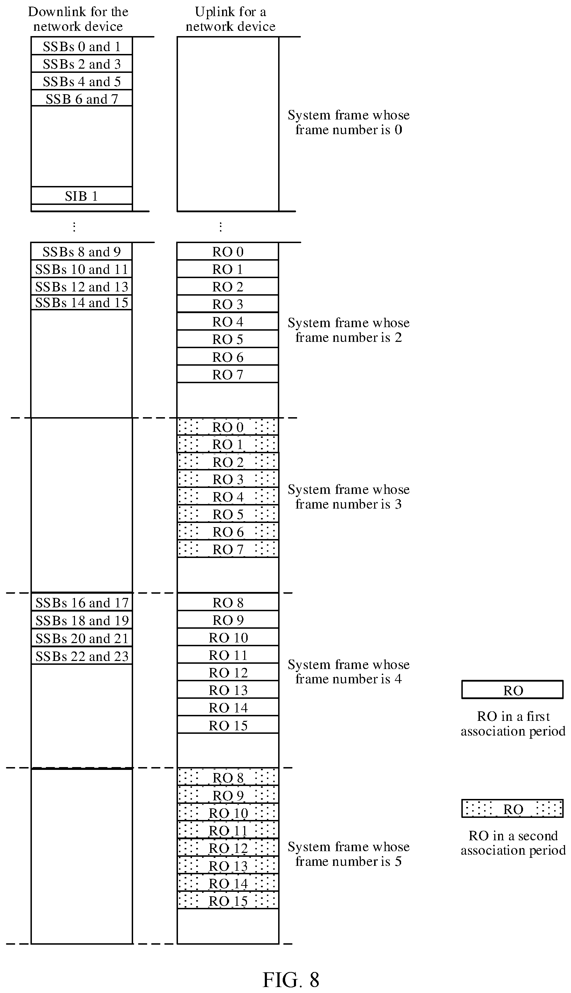

As shown in FIG. 8, the terminal device configures a 1st PRACH configuration period in the first association period from the system frame whose frame number is 2, and sequentially maps the SSB 0 to the SSB 7 to ROs in this PRACH configuration period based on indexes of the SSBs. After completing configuring this PRACH configuration period, the terminal device configures a 1st PRACH configuration period in the second association period from the system frame whose frame number is 3, and sequentially maps the SSBs to ROs in this PRACH configuration period based on the indexes of the SSBs.

Then, the terminal device configures a 2nd PRACH configuration period in the first association period from the system frame whose frame number is 4, and sequentially maps an SSB 8 to an SSB 15 to ROs in this PRACH configuration period based on indexes of the SSBs. After completing configuring this PRACH configuration period, the terminal device configures a 2nd PRACH configuration period in the second association period from a system frame whose frame number is 5, and sequentially maps the SSB 8 to the SSB 15 to ROs in this PRACH configuration period based on the indexes of the SSBs.

Further, an implementation in which the terminal device maps the other SSBs sent by the network device in the SSB period to the ROs in the first association period and the ROs in the second association period is deduced by analogy, until all of the SSB 0 to the SSB 255 in the SSB period are mapped to the first association period and the second association period, to obtain a mapping relationship shown in FIG. 8. In FIG. 8, an RO n is associated with an SSB whose index is n. For example, for an RO 1, n is 1, and the SSB 1 is associatively mapped to the RO 1. If the target SSB selected by the terminal device is the SSB 0, the ROs that are associated with the target SSB and that are in the first association period and the second association period are ROs 0.

Scenario 2: The interval duration, indicated by the first offset value, between the start time domain position of the first association period and the start time domain position of the reference system frame (assumed to be the system frame whose frame number is 0) is two system frames. The second offset value indicates that the interval duration between the start time domain position of the second association period and the start time domain position of the first association period is 33 system frames.

The terminal device determines, based on the first offset value, that the start time domain position of the first association period is the start time domain position of the system frame whose frame number is 2, and determines, based on the second offset value, that the start time domain position of the second association period is a start time domain position of a system frame whose frame number is 35.

The terminal device determines, based on the first information and the second information, that one PRACH configuration period in the first association period and the second association period occupies two system frames, and that there are eight ROs in one PRACH configuration period.

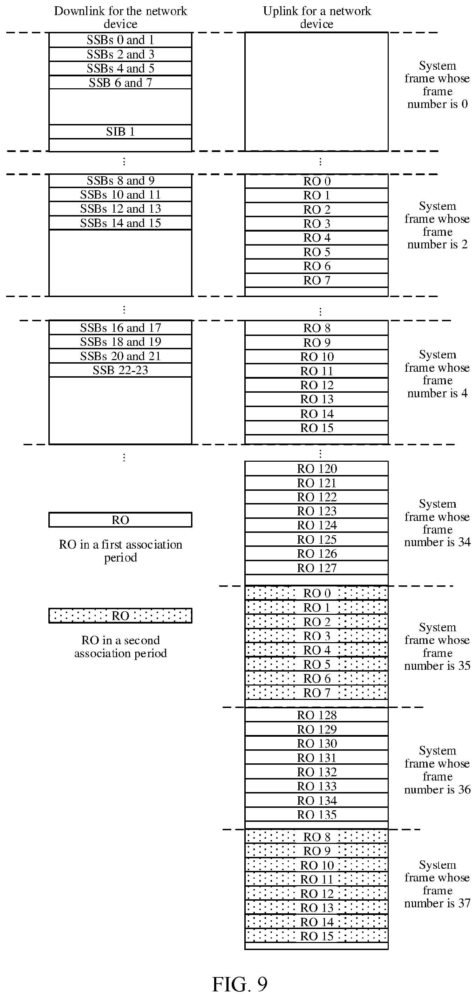

As shown in FIG. 9, the terminal device configures a 1st PRACH configuration period in the first association period from the system frame whose frame number is 2, and sequentially maps the SSB 0 to the SSB 7 to ROs in this PRACH configuration period based on indexes of the SSBs. After completing configuring this PRACH configuration period, the terminal device configures a 1st PRACH configuration period in the second association period from the system frame whose frame number is 35, and sequentially maps the SSB 0 to the SSB 7 to ROs in this PRACH configuration period based on the indexes of the SSBs.

Then, the terminal device configures a 2nd PRACH configuration period in the first association period from the system frame whose frame number is 4, and sequentially maps an SSB 8 to an SSB 15 to ROs in this PRACH configuration period based on indexes of the SSBs. After completing configuring this PRACH configuration period, the terminal device configures a 2nd PRACH configuration period in the second association period from a system frame whose frame number is 37, and sequentially maps the SSB 8 to the SSB 15 to ROs in this PRACH configuration period based on the indexes of the SSBs.

Further, an implementation in which the terminal device maps the other SSBs sent by the network device in the SSB period to the ROs in the first association period and the ROs in the second association period is deduced by analogy, until all of the SSB 0 to the SSB 255 in the SSB period are mapped to the first association period and the second association period, to obtain a mapping relationship shown in FIG. 9. In FIG. 9, an RO n is associated with an SSB whose index is n. For example, for an RO 1, n is 1, and the SSB 1 is associatively mapped to the RO 1. If the target SSB selected by the terminal device is the SSB 0, the ROs that are associated with the target SSB and that are in the first association period and the second association period are ROs 0.

In the foregoing Scenario 1 and Scenario 2, the first information is the same as the second information. The following describes an example scenario in which the first information is different from the second information and the configuration of the PRACH configuration period in the first association period is different from the configuration of the PRACH configuration period in the second association period.

Scenario 3: The interval duration, indicated by the first offset value, between the start time domain position of the first association period and the start time domain position of the reference system frame (assumed to be the system frame whose frame number is 0) is two system frames. The second offset value indicates that the interval duration between the start time domain position of the second association period and the start time domain position of the reference system frame is three system frames.

The terminal device determines, based on the first offset value, that the start time domain position of the first association period is the start time domain position of the system frame whose frame number is 2, and determines, based on the second offset value, that the start time domain position of the second association period is a start time domain position of a system frame whose frame number is 3.

The terminal device determines, based on the first information, that one PRACH configuration period in the first association period occupies one system frame, and that there are eight ROs in one PRACH configuration period. The terminal device determines, based on the second information, that one PRACH configuration period in the second association period occupies one system frame, and that there are four ROs in one PRACH configuration period.

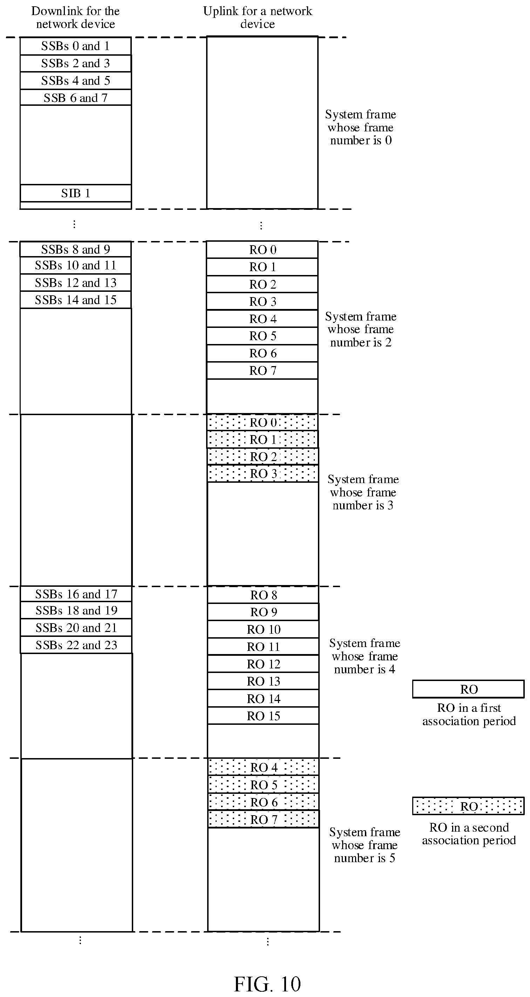

As shown in FIG. 10, the terminal device configures a 1st PRACH configuration period in the first association period from the system frame whose frame number is 2, and sequentially maps the SSB 0 to the SSB 7 to ROs in this PRACH configuration period based on indexes of the SSBs. After completing configuring this PRACH configuration period, the terminal device configures a 1st PRACH configuration period in the second association period from the system frame whose frame number is 3, and sequentially maps the SSB 0 to the SSB 3 to ROs in this PRACH configuration period based on the indexes of the SSBs.

Then, the terminal device configures a 2nd PRACH configuration period in the first association period from the system frame whose frame number is 4, and sequentially maps an SSB 8 to an SSB 15 to ROs in this PRACH configuration period based on indexes of the SSBs. After completing configuring this PRACH configuration period, the terminal device configures a 2nd PRACH configuration period in the second association period from a system frame whose frame number is 5, and sequentially maps the SSB 4 to the SSB 7 to ROs in this PRACH configuration period based on the indexes of the SSBs.

Further, if the terminal device subsequently receives the other SSBs in the SSB period, an implementation in which the terminal device maps the other received SSBs to the ROs in the first association period and the ROs in the second association period is deduced by analogy, until all of the SSB 0 to the SSB 255 in the SSB period are mapped to the first association period and the second association period, to obtain a mapping relationship shown in FIG. 10. In FIG. 10, an RO n is associated with an SSB whose index is n. For example, for an RO 1, n is 1, and the SSB 1 is associatively mapped to the RO 1. If the target SSB selected by the terminal device is the SSB 0, the ROs that are associated with the target SSB and that are in the first association period and the second association period are ROs 0.

It should be noted that in the foregoing descriptions of the example scenarios, values of a quantity of SSBs, the offset values, a quantity of ROs in the PRACH period, and the like are all examples. Specific values are not limited in this embodiment of this application.

For S604, after determining one or more ROs associated with the target SSB, the terminal device selects one RO from the one or more ROs, and sends the preamble on the RO. Correspondingly, the network device receives, on the RO, the preamble sent by the terminal device.

Optionally, the terminal device may randomly select one RO from the one or more ROs associated with the target SSB. Alternatively, the terminal device may select an RO closest to a current time point from the one or more ROs associated with the target SSB. Alternatively, the terminal device may select, in another manner, one RO from the one or more ROs associated with the target SSB. This is not limited in this embodiment of this application.

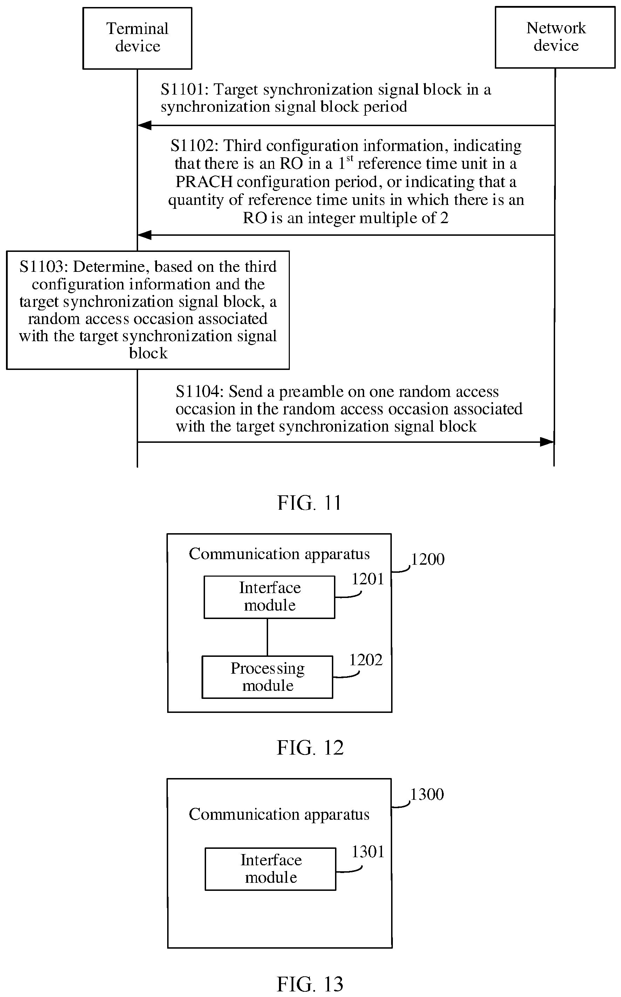

An embodiment of this application further provides another random access method, and an interaction example of the method is shown in FIG. 11. In FIG. 11, the method is described by using an example in which a network device and a terminal device are execution bodies of the interaction example. However, the execution bodies of the interaction example are not limited in this application. For example, the network device in FIG. 11 may alternatively be a chip, a chip system, or a processor that supports the network device in implementing the method, or may be a logical module or software that can implement all or some functions of the network device. The terminal device in FIG. 11 may alternatively be a chip, a chip system, or a processor that supports the terminal device in implementing the method, or may be a logical module or software that can implement all or some functions of the terminal device. The random access method includes S1101 to S1104.

S1101: The terminal device receives a target synchronization signal block in a synchronization signal block period from the network device.

S1102: The terminal device receives third configuration information from the network device based on the target synchronization signal block, where the third configuration information indicates that there is an RO in a 1st reference time unit in a PRACH configuration period, and the reference time unit is a subframe or a slot; or the third configuration information indicates that a quantity of reference time units in which there is an RO in a PRACH configuration period is an integer multiple of 2.

S1103: The terminal device determines, based on the third configuration information and the target synchronization signal block, a random access occasion associated with the target synchronization signal block.

S1104: The terminal device sends a preamble to the network device on one random access occasion in the random access occasion associated with the target synchronization signal block.

According to a current protocol, a quantity of subframes including an RO that can be configured in a PRACH configuration period of a single system frame in an FR1 frequency band is 1, 2, 3, 5, or 10, and the subframes including an RO are discontinuous. On the one hand, if a quantity of SSBs is an integer multiple of 8, when the SSBs are mapped to ROs, RO resources whose quantity is not an integer multiple of the quantity of SSBs cannot establish association relationships with the SSBs and become invalid, causing a waste of uplink resources. For example, when eight SSBs are mapped to 10 ROs according to a one-to-one mapping rule, the eight SSBs may be mapped to the first eight ROs, and the remaining two RO resources are not mapped with SSBs, become invalid, cannot be used for sending on ROs, and cannot be used to transmit data, causing a waste of resources. On the other hand, when the subframes including an RO are scattered, remaining time-frequency resources that can be used for uplink data transmission are discontinuous, and it is unlikely to use continuous time-frequency resources to transmit uplink signaling with a heavy load, affecting access performance.

According to the random access method in this embodiment of this application, the terminal device may determine, based on the third configuration information, that there is the RO in the 1st reference time unit in the PRACH configuration period. In other words, a reference time unit in which there is an RO may be as early as possible in the PRACH configuration period, and remaining continuous time-frequency resources can be used for uplink data transmission. Alternatively, the terminal device may determine, based on the third configuration information, that the quantity of reference time units in which there is an RO in the PRACH configuration period is the integer multiple of 2, to avoid a case in which when a quantity of SSBs is an integer multiple of 8, RO resources whose quantity is not an integer multiple of the quantity of SSBs cannot be used to establish association relationships with the SSBs and become invalid, causing a waste of uplink resources.

For a specific implementation of S1101, refer to the foregoing descriptions of S601. Details are not described herein again.

In S1102, the third configuration information may be carried in a system message, for example, may be carried in a SIB 1. For a specific implementation in which the terminal device obtains the third configuration information based on the target SSB, refer to the foregoing descriptions of obtaining the first configuration information in S602.

The third configuration information may be the configuration information used to configure the PRACH configuration period. Specifically, the third configuration information may indicate that there is the RO in the 1st reference time unit in the PRACH configuration period. The 1st reference time unit is an earliest reference time unit in time domain in the PRACH configuration period. Alternatively, the third configuration information may indicate that the quantity of reference time units in which there is an RO in the PRACH configuration period is the integer multiple of 2.

The reference time unit may be a subframe or a slot. For example, the third configuration information indicates that there is an RO in a 1st subframe in the PRACH configuration period. For another example, the third configuration information indicates that a quantity of slots in which there is an RO in the PRACH configuration period is 2, 4, 6, or 8.

Optionally, if the third configuration information indicates that the quantity of reference time units in which there is an RO in the PRACH configuration period is the integer multiple of 2, the reference time units in which there is an RO in the PRACH configuration period, indicated by the third configuration information, may be continuous in time domain. For example, the third configuration information indicates that four subframes whose indexes are 1, 2, 3, and 4 in the PRACH configuration period are subframes in which there is an RO. According to this solution, continuous uplink resources may be provided for sending on ROs, improving the access performance.

Further, the third configuration information may indicate that the reference time units in which there is an RO in the PRACH configuration period are first N reference time units in the PRACH configuration period, where N is an integer multiple of 2. For example, the third configuration information indicates that there are ROs in first eight slots in the PRACH configuration period. According to this solution, continuous uplink resources may be provided for sending on the ROs, and remaining continuous uplink resources may be used to transmit other uplink data, for example, uplink data in a random access process such as a message 3 (message 3, Msg3), a message 5 (message 5, Msg5), and UE capability information.

For example, if the reference time unit is a subframe, the third configuration information may indicate, in a form shown in the following Table 3, the reference time unit in which there is an RO in the PRACH configuration period.

Table 3

| PRACH configuration index | Index of a subframe in which there is an RO |
| --- | --- |
| 1 | 0 |
| 2 | 0and 1 |
| 3 | 0, 1, 2, and 3 |
| 4 | 0, 1, 2, 3, 4, 5, 6, and 7 |
| 5 | 0 and 2 |
| 6 | 0, 2, 4, and 6 |
| 7 | 1, 3, 5, and 7 |
| 8 | 2, 4, 6, and 8 |
| 9 | 0, 3, 6, and 9 |

In Table 3, the PRACH configuration index 1 indicates that the index of the subframe in which there is an RO in the PRACH configuration period is 0, that is, there is an RO in a 1st subframe in the PRACH configuration period.

In Table 3, the PRACH configuration indexes 2 to 4 may indicate that in the PRACH configuration period, subframes in which there is an RO are in the front and continuous in time domain and a quantity of subframes in which there is an RO is an integer multiple of 2. Specifically, the PRACH configuration index 2 indicates that the index of the subframe in which there is an RO in the PRACH configuration period is 0 and 1, that is, there are ROs in a 1st subframe and a 2nd subframe in the PRACH configuration period. The PRACH configuration index 3 indicates that the index of the subframe in which there is an RO in the PRACH configuration period is 0, 1, 2, and 3, that is, there is an RO in first four subframes in the PRACH configuration period. The PRACH configuration index 4 indicates that the index of the subframe in which there is an RO in the PRACH configuration period includes 0, 1, 2, 3, 4, 5, 6, and 7, that is, there is an RO in first eight subframes in the PRACH configuration period.

In Table 3, the PRACH configuration indexes 5 to 9 may indicate that in the PRACH configuration period, subframes in which there is an RO are in the front in time domain and a quantity of subframes in which there is an RO is an integer multiple of 2. Specifically, the PRACH configuration index 5 indicates that the index of the subframe in which there is an RO in the PRACH configuration period includes 0 and 2, that is, there is an RO in the 1st subframe and a 3rd subframe in the PRACH configuration period. The PRACH configuration index 6 indicates that the index of the subframe in which there is an RO in the PRACH configuration period includes 0, 2, 4, and 6, that is, there is an RO in the 1st subframe, the 3rd subframe, a 5th subframe, and a 7th subframe in the PRACH configuration period. The PRACH configuration index 7 indicates that the index of the subframe in which there is an RO in the PRACH configuration period includes 1, 3, 5, and 7, that is, there is an RO in the 2nd subframe, a 4th subframe, a 6th subframe, and an 8th subframe in the PRACH configuration period. The PRACH configuration index 8 indicates that the index of the subframe in which there is an RO in the PRACH configuration period includes 2, 4, 6, and 8, that is, there is an RO in the 3rd subframe, the 5th subframe, the 7th subframe, and a 9th subframe in the PRACH configuration period. The PRACH configuration index 9 indicates that the index of the subframe in which there is an RO in the PRACH configuration period includes 0, 3, 6, and 9, that is, there is an RO in the 1st subframe, the 4th subframe, the 7th subframe, and a 10th subframe in the PRACH configuration period.

It should be noted that a correspondence between a PRACH configuration index and an index of a subframe in which there is an RO shown in the foregoing Table 3 is an example form of indicating the reference time unit in which there is an RO in this embodiment of this application. A specific form of indicating the reference time unit in which there is an RO is not limited in this embodiment of this application.

It should be noted that if the third configuration information indicates, by using a correspondence between a PRACH configuration index and an index of a reference time unit in which there is an RO in the PRACH configuration period, the reference time unit in which there is an RO in the PRACH configuration period, a specific form of the correspondence between a PRACH configuration index and an index of a reference time unit in which there is an RO in the PRACH configuration period in the third configuration information is not limited in this embodiment of this application. For example, the third configuration information may include any one or more rows in the foregoing Table 3. For another example, the index of the subframe in which there is an RO in Table 3 may be adjusted to an index of a slot in which there is an RO.

Optionally, the third configuration information may further be used to configure at least one of the following: a preamble format (preamble format) on the RO, duration of the PRACH configuration period, a location of a start symbol of the RO in the PRACH configuration period, a quantity of PRACH slots in one subframe, a quantity of ROs in one PRACH slot, and a quantity of symbols occupied by one RO.

For example, if the reference time unit is a subframe, the third configuration information may indicate, in a form shown in the following Table 4, the reference time unit in which there is an RO in the PRACH configuration period.

Table 4

| PRACH configuration index | Preamble format | $n_{SFN}$ mod $x$ = $y$ | | Subframe number | $l_0$ | $n_{slot}^{RA}$ | $N_t^{RA,slot}$ | $N_{dur}^{RA}$ |
|---|---|---|---|---|---|---|---|---|
| | | $x$ | $y$ | | | | | |
| 0 | B4 | 1 | 0 | 0 and 1 | 0 | 1 | 1 | 12 |
| 1 | B4 | 1 | 0 | 0, 1, 2, and 3 | 0 | 1 | 1 | 12 |
| 2 | B4 | 1 | 0 | 0, 1, 2, 3, 4, 5, 6, and 7 | 0 | 1 | 1 | 12 |
| 3 | B4 | 2 | 0 | 0, 1, 2, 3, 4, 5, 6, and 7 | 0 | 1 | 1 | 12 |
| 4 | B4 | 4 | 0 | 0, 1, 2, 3, 4, 5, 6, and 7 | 0 | 1 | 1 | 12 |
| 5 | B4 | 4 | 0 | 0, 1, 2, 3, 10, 11, 12, and 13 | 0 | 1 | 1 | 12 |
| 6 | A3/B3 | 1 | 0 | 0 | 0 | 1 | 2 | 6 |
| 7 | A3/B3 | 1 | 0 | 0 and 1 | 0 | 1 | 2 | 6 |
| 8 | A3/B3 | 1 | 0 | 0, 1, 2, and 3 | 0 | 1 | 2 | 6 |
| 9 | A3/B3 | 2 | 0 | 0, 1, 2, and 3 | 0 | 1 | 2 | 6 |
| 10 | A3/B3 | 4 | 0 | 0, 1, 2, and 3 | 0 | 1 | 2 | 6 |
| 11 | A3/B3 | 4 | 0 | 0, 1, 10, and 11 | 0 | 1 | 2 | 6 |
| 12 | C2 | 1 | 0 | 0 | 0 | 1 | 2 | 6 |
| 13 | C2 | 1 | 0 | 0 and 1 | 0 | 1 | 2 | 6 |
| 14 | C2 | 1 | 0 | 0, 1, 2, and 3 | 0 | 1 | 2 | 6 |
| 15 | C2 | 2 | 0 | 0, 1, 2, and 3 | 0 | 1 | 2 | 6 |
| 16 | C2 | 4 | 0 | 0, 1, 2, and 3 | 0 | 1 | 2 | 6 |
| 17 | C2 | 4 | 0 | 0, 1, 10, and 11 | 0 | 1 | 2 | 6 |

For meanings of the PRACH configuration index, the preamble format, $n_{SFN}$mod$x$ = $y$, the subframe number, $l_0$, $n_{slot}^{RA}$, $N_t^{RA,slot}$, and $N_{dur}^{RA}$ in Table 4, refer to the foregoing descriptions of Table 1. Details are not described herein again.

In Table 4, there is a correspondence between the PRACH configuration index, the preamble format, $n_{SFN}$mod$x$ = $y$, the subframe number, $l_0$, $n_{slot}^{RA}$, $N_t^{RA,slot}$, and $N_{dur}^{RA}$. The third configuration information may not only indicate, based on a correspondence between the PRACH configuration index and the subframe number shown in Table 4, a subframe in which there is an RO in the PRACH configuration period, but also configure another configuration of the PRACH configuration period based on a correspondence between the PRACH configuration index, the preamble format, $n_{SFN}$mod$x$ = $y$, $l_0$, $n_{slot}^{RA}$, $N_t^{RA,slot}$, and $N_{dur}^{RA}$.

APRACH configuration period corresponding to the row in which the PRACH configuration index is 3 in Table 4 is used as an example. The preamble format is B4, indicating that a preamble format of the preamble on an RO in the PRACH configuration period is B4. x=2 and y=0, that is, $n_{SFN}$mod2 = 0, indicating that the PRACH configuration period is two system frames. The subframe number is 0, 1, 2, 3, 4, 5, 6, and 7, indicating that an index of a subframe in which there is an RO in the PRACH configuration period includes 0, 1, 2, 3, 4, 5, 6, and 7, that is, there is an RO in first eight subframes in the PRACH configuration period. $l_0$ is 0, indicating that an index of a start symbol of an RO in the PRACH configuration period is 0. $n_{slot}^{RA}$ is 1, indicating that in the PRACH configuration period, one subframe includes one PRACH slot. $N_t^{RA,slot}$ is 1, indicating that one PRACH slot includes one RO. $N_{dur}^{RA}$ is 12, indicating that one RO occupies 12 symbols.

Optionally, when the PRACH configuration period includes a plurality of system frames, indexes of reference time units in which there is an RO in different system frames, configured by using the third configuration information, may be the same.

For example, a PRACH configuration period corresponding to the row in which the PRACH configuration index is 11 in Table 4 is used as an example. The subframe number is {0, 1, 10, 11}, indicating that an index of a subframe in which there is an RO in the PRACH configuration period is 0, 1, 10, and 11. In $n_{SFN}$mod$x$ = $y$, x=4, indicating that the PRACH configuration period includes four system frames. In addition, when y=0, $n_{SFN}$mod4 = 0 indicates that the PRACH configuration period is four system frames, and a 1st system frame in every four system frames is a system frame from which an RO configuration starts. In addition, when x=4 and y=1, $n_{SFN}$mod4 = 1 indicates that the PRACH configuration period is four system frames, and a 2nd system frame in every four system frames is a system frame from which an RO resource configuration starts. When x=4 and y=2, $n_{SFN}$mod4 = 2 indicates that the PRACH configuration period is four system frames, and a 3rd system frame in every four system frames is a system frame from which an RO configuration starts. Similarly, when the PRACH configuration period is a plurality of system frames, a system frame from which an RO configuration starts may be deduced by analogy, and details are not described herein again. That the subframe number is {0, 1, 10, 11} may be understood as follows: In the PRACH configuration period, from a system frame from which an RO configuration starts, an index of a subframe in which there is an RO in a 1st system frame is 0 and 1, and an index of a subframe in which there is an RO in a 2nd system frame is also 0 and 1 (corresponding to subframe numbers 10 and 11). Similarly, a PRACH configuration period corresponding to the row in which the PRACH configuration index is 5 in Table 4 is used as an example. The subframe number is {0, 1, 2, 3, 10, 11, 12, 13}, indicating that in the PRACH configuration period, from a system frame from which an RO configuration starts, an index of a subframe in which there is an RO in a 1st system frame is 0, 1, 2, and 3, and an index of a subframe in which there is an RO in a 2nd system frame is also 0, 1, 2, and 3 (corresponding to subframe numbers 10, 11, 12, and 13).

For another example, if the reference time unit is a subframe, the third configuration information may alternatively indicate, in a form in the following Table 5, the reference time unit in which there is an RO in the PRACH configuration period.

Table 5

| PRACH configuration index | Preamble format | $n_{SFN}$ mod $x$ = $y$ | | Subframe number | $l_0$ | $n_{slot}^{RA}$ | $N_t^{RA,slot}$ | $N_{dur}^{RA}$ |
|---|---|---|---|---|---|---|---|---|
| | | x | y | | | | | |
| 0 | B4 | 1 | 0 | 0 and 1 | 0 | 1 | 1 | 12 |
| 1 | B4 | 1 | 0 | 0, 1, 2, and 3 | 0 | 1 | 1 | 12 |
| 2 | B4 | 1 | 0 | 0, 1, 2, 3, 4, 5, 6, and 7 | 0 | 1 | 1 | 12 |
| 3 | B4 | 2 | 0 | 0, 1, 2, 3, 4, 5, 6, and 7 | 0 | 1 | 1 | 12 |
| 4 | B4 | 4 | 0 | 0, 1, 2, 3, 4, 5, 6, and 7 | 0 | 1 | 1 | 12 |
| 5 | B4 | 4 | 0 and 1 | 0, 1, 2, and 3 | 0 | 1 | 1 | 12 |
| 6 | A3/B3 | 1 | 0 | 0 | 0 | 1 | 2 | 6 |
| 7 | A3/B3 | 1 | 0 | 0 and 1 | 0 | 1 | 2 | 6 |
| 8 | A3/B3 | 1 | 0 | 0, 1, 2, and 3 | 0 | 1 | 2 | 6 |
| 9 | A3/B3 | 2 | 0 | 0, 1, 2, and 3 | 0 | 1 | 2 | 6 |
| 10 | A3/B3 | 4 | 0 | 0, 1, 2, and 3 | 0 | 1 | 2 | 6 |
| 11 | A3/B3 | 4 | 0 and 1 | 0 and 1 | 0 | 1 | 2 | 6 |
| 12 | C2 | 1 | 0 | 0 | 0 | 1 | 2 | 6 |
| 13 | C2 | 1 | 0 | 0 and 1 | 0 | 1 | 2 | 6 |
| 14 | C2 | 1 | 0 | 0, 1, 2, and 3 | 0 | 1 | 2 | 6 |
| 15 | C2 | 2 | 0 | 0, 1, 2, and 3 | 0 | 1 | 2 | 6 |
| 16 | C2 | 4 | 0 | 0, 1, 2, and 3 | 0 | 1 | 2 | 6 |

(continued)

| PRACH configuration index | Preamble format | $n_{SFN} \bmod x = y$ | | Subframe number | $l_0$ | $n_{slot}^{RA}$ | $N_t^{RA,slot}$ | $N_{dur}^{RA}$ |
| | | x | y | | | | | |
|---|---|---|---|---|---|---|---|---|
| 17 | C2 | 4 | 0 and 1 | 0 and 1 | 0 | 1 | 2 | 6 |

For meanings of the PRACH configuration index, the preamble format, $n_{SFN} \bmod x = y$, the subframe number, $l_0$, $n_{slot}^{RA}$, $N_t^{RA,slot}$, and $N_{dur}^{RA}$ in Table 5, refer to the foregoing descriptions of Table 1. Details are not described herein again.

In Table 5, there is a correspondence between the PRACH configuration index, the preamble format, $n_{SFN} \bmod x = y$, the subframe number, $l_0$, $n_{slot}^{RA}$, $N_t^{RA,slot}$, and $N_{dur}^{RA}$. The third configuration information may not only indicate, based on a correspondence between the PRACH configuration index and the subframe number shown in Table 5, a subframe in which there is an RO in the PRACH configuration period, but also configure another configuration of the PRACH configuration period based on a correspondence between the PRACH configuration index, the preamble format, $n_{SFN} \bmod x = y$, $l_0$, $n_{slot}^{RA}$, $N_t^{RA,slot}$, and $N_{dur}^{RA}$.

In Table 5, the subframe number corresponding to the PRACH configuration index is a subframe number in one system frame. Table 5 is established based on a scenario in which one system frame includes 10 subframes, subframe numbers are from 0 to 9, and a maximum value is 9. Therefore, in Table 5, a subframe number corresponding to one PRACH configuration index does not exceed 9. It may be understood that if a quantity of subframes included in one system frame is subsequently adjusted, for example, increased to 12 subframes or decreased to eight subframes, in Table 5, the maximum value of the subframe number corresponding to the PRACH configuration index may also be correspondingly adjusted, and does not exceed a maximum value of the subframe number in one system frame.

Optionally, when the PRACH configuration period includes a plurality of system frames, indexes of reference time units in which there is an RO in different system frames, configured by using the third configuration information, may be the same. Table 5 is used as an example. If a PRACH configuration period corresponding to a PRACH configuration index includes a plurality of system frames, a subframe number corresponding to the PRACH configuration index is an index of a subframe in which there is an RO in the system frame.

A PRACH configuration period corresponding to the row in which the PRACH configuration index is 5 in Table 5 is used as an example. The preamble format is B4, indicating that a preamble format of a preamble on an RO in the PRACH configuration period is B4. x=4 indicates that the PRACH configuration period is four system frames. When y=0 or 1, and y=0, $n_{SFN} \bmod 4 = 0$ indicates that a 1st system frame in every four system frames includes a subframe in which there is an RO. When y=1, $n_{SFN} \bmod 4 = 1$ indicates that a 2nd system frame in every four system frames includes a subframe in which there is an RO. The subframe number is 0, 1, 2, and 3, indicating that in the PRACH configuration period, if the system frame includes a subframe in which there is an RO, an index of the subframe in which there is an RO includes 0, 1, 2, and 3. In other words, in every four system frames, a 1st system frame and a 2nd system frame include a subframe in which there is an RO, an index of the subframe in which there is an RO in the 1st system frame is 0, 1, 2, and 3 (corresponding to subframe numbers 0, 1, 2, and 3), and an index of the subframe in which there is an RO in the 2nd system frame is also 0, 1, 2, and 3 (corresponding to subframe numbers 0, 1, 2, and 3).

In addition, in the row in which the PRACH configuration index is 5, $l_0$ is 0, indicating that an index of a start symbol of an RO in the PRACH configuration period is 0. $n_{slot}^{RA}$ is 1, indicating that in the PRACH configuration period, one subframe includes one PRACH slot. $N_t^{RA,slot}$ is 1, indicating that one PRACH slot includes one RO. $N_{dur}^{RA}$ is 12, indicating that one RO occupies 12 symbols.

It may be understood that in the example (for example, Table 3, Table 4, or Table 5) of the third configuration information in a table form shown in the foregoing embodiment, specific content in the table is merely an example. Formats/values of different information in the table may be adjusted: Information in the table may be deleted, information may be added to the table, or rows and columns in the table may be randomly combined, to form new third configuration information in the table form. Content and a form of the third configuration information are not limited in this embodiment of this application.

In S1103, the terminal device may determine the RO configuration in the PRACH configuration period based on the third configuration information, that is, an RO configuration in each PRACH configuration period in an association period, to determine an RO in the association period, and map an SSB in the SSB period to the RO in the association period. Then, the terminal device determines, based on the index of the target SSB, an RO associated with the target SSB. For a specific implementation in which the terminal device determines the RO in the association period based on the configuration of the PRACH configuration period, and maps the SSB in the SSB period to the RO in the association period, refer to the foregoing descriptions of corresponding content in S603. Details are not described herein again.

Optionally, a start time domain position of the association period may be a start time domain position of a system frame whose frame number is 0. In other words, the terminal device may determine the start time domain position of the association period according to an existing protocol, to determine the RO in the association period with reference to the third configuration information. Alternatively, the terminal device may determine, in the manner in the method embodiment shown in FIG. 6, a start time domain position or start time domain positions of one or more association periods (for example, a first association period and/or a second association period) corresponding to the SSB period, to determine the RO in the association period with reference to the third configuration information.

It should be noted that if the terminal device determines, in the manner in the random access method shown in FIG. 6, the start time domain position or start time domain positions of the one or more association periods corresponding to the SSB period, the third configuration information may alternatively be first configuration information or second configuration information. For example, when the third configuration information is the first configuration information, the terminal device may determine, based on the first configuration information, that in the first association period, there is an RO in a $1^{st}$ reference time unit in a PRACH configuration period, or that a quantity of reference time units in which there is an RO in a PRACH configuration period is an integer multiple of 2. When the third configuration information is the second configuration information, the terminal device may determine, based on the second configuration information, that in the second association period, there is an RO in a $1^{st}$ reference time unit in a PRACH configuration period, or that a quantity of reference time units in which there is an RO in a PRACH configuration period is an integer multiple of 2.

Optionally, when the terminal device determines the RO configuration in the PRACH configuration period based on the third configuration information, an actual time unit may be different from the reference time unit in the third configuration information. In this case, the terminal device may determine, based on a relationship between the reference time unit in the third configuration information and the actual time unit, the time unit in which there is an RO in the PRACH configuration period. A specific implementation in which the terminal device determines, in this case based on the third configuration information, the time unit in which there is an RO in the PRACH configuration period is not limited in this application.

For example, the reference time unit in which there is an RO in the third configuration information is a subframe when a subcarrier spacing is 15 kHz. One subframe corresponds to one slot. The third configuration information indicates that there is an RO in a $1^{st}$ subframe in the PRACH configuration period. When the terminal device determines the RO configuration in the PRACH configuration period based on the third configuration information, the subcarrier spacing is 30 kHz, and one subframe includes two slots. The terminal device may configure that there is an RO in both two slots included in the $1^{st}$ subframe, or may configure that there is an RO in a $1^{st}$ slot in two slots included in the $1^{st}$ subframe, or may configure that there is an RO in a $2^{nd}$ slot in two slots included in the $1^{st}$ subframe.

Optionally, when the terminal device determines the RO configuration in the PRACH configuration period based on the third configuration information, if an actual time unit is the same as the reference time unit in the third configuration information, the terminal device may directly determine, based on an indication of the third configuration information, the time unit in which there is an RO in the PRACH configuration period.

For example, the reference time unit in which there is an RO in the third configuration information is a subframe when a subcarrier spacing is 15 kHz. One subframe corresponds to one slot. The third configuration information indicates that there is an RO in a $1^{st}$ subframe in the PRACH configuration period. When the terminal device determines the RO configuration in the PRACH configuration period based on the third configuration information, the subcarrier spacing is 15 kHz, and the terminal device may configure that there is an RO in a slot corresponding to the $1^{st}$ subframe.

For a specific implementation of S1104, refer to the foregoing descriptions of S604. Details are not described herein again.

In a random access procedure, a terminal device may select an SSB, select an RO corresponding to the SSB, and send a preamble on the selected RO. However, in some cases, when the terminal device sends the preamble by using the selected RO, the selected RO may not be an RO corresponding to an optimal SSB at a current moment. For example, in an NTN system, if a target SSB selected by the terminal device from received SSBs is an SSB #0, the terminal device receives the SSB #0 at a moment t1, and determines that an RO corresponding to the SSB #0 is an RO #0, to send the preamble on the RO #0 at a moment t2. However, due to factors such as highspeed movement of a satellite or a change in a location of the terminal device, an interval between the moment t2 and the moment t1 may be excessively long, and exceeds an SSB period. For example, t2-t1=1s, but the SSB period is 640 ms, and 1s>640 ms. As a result, an SSB beam serving the terminal device at the moment t2 changes. In other words, an optimal SSB serving the terminal device at the moment t2 is no longer the SSB #0. As a result, the preamble sent by the terminal device on the RO #0 at the moment t2 cannot be correctly received by a network side, affecting access performance.

Based on the foregoing problem, optionally, an embodiment of this application further provides a solution in which the RO selected by the terminal device can be restricted. In this solution, the terminal device expects interval duration between a moment at which the RO (which may be referred to as a target RO) selected by the terminal device for sending the preamble is located and a moment at which the terminal device receives the target SSB not to exceed specific duration (the specific duration may be referred to as valid duration or a validity period, and a specific name of the specific duration is not limited in this embodiment of this application). It may also be understood that the terminal device expects the selected RO to be within the valid duration.

Optionally, the moment at which the target RO is located may be a moment at which any time domain position corresponding to the target RO (for example, a start time domain position or an end time domain position of the RO) is located.

For example, if the valid duration is T, and the moment at which the terminal device receives the target SSB is t1, the terminal device selects, from an RO associated with the target SSB, the target RO at a moment within t1+T, to send the preamble.

The following describes several manners of determining the valid duration.

Optionally, a value of the valid duration may be preconfigured by the terminal device, or may be predefined in a protocol. When the terminal device preconfigures the value of the valid duration, a network device may preconfigure a same value of the valid duration. In other words, the value of the valid duration may be predetermined by the terminal device and the network device. For example, the terminal device and the network device may predetermine the valid duration as 160 ms, 320 ms, or 640 ms. Alternatively, the valid duration may be defined as 160 ms, 320 ms, or 640 ms in the protocol.

Optionally, a value of the valid duration may alternatively be indicated by a network device. For example, the network device may configure the valid duration to 160 ms, 320 ms, or 640 ms by using a system message or RRC signaling.

Optionally, a value of the valid duration may alternatively be predefined in a protocol and indicated by a network device. For example, if the valid duration is defined as the SSB period in the protocol, and the network device indicates, by using system information, that the SSB period is 160 ms, the terminal device determines that the valid duration is 160 ms.

Optionally, the valid duration may be less than or equal to the SSB period.

Optionally, the valid duration may be set to minimum duration in which a direction of an SSB beam with a same SSB index remains unchanged in one or more SSB periods, or may be set to minimum duration in which a service area of an SSB beam with a same SSB index remains unchanged in one or more SSB periods.

Optionally, duration in which a direction of an SSB beam corresponding to each SSB index or a service area of an SSB beam corresponding to each SSB index remains unchanged in the one or more SSB periods may be predetermined by the network device and the terminal device, or may be predefined in the protocol, or may be indicated by the network device to the terminal device. A specific implementation in which the terminal device determines the duration in which the direction of the SSB beam with the same SSB index or the service area of the SSB beam with the same SSB index remains unchanged is not limited in this embodiment of this application.

For example, it is assumed that the SSB period is 160 ms, and the network device sends 64 SSBs within 160 ms. For an SSB 0, a beam direction is a beam 0, and a service ground area is 0. For an SSB 1, a beam direction is a beam 1, and a service ground area is 1. It is assumed that within 320 ms (two SSB periods), the beam direction corresponding to the SSB 0 remains unchanged in 1st 160 ms (a 1st SSB period) and 2nd 160 ms (a 2nd SSB period), and is the beam 0, or the service ground area corresponding to the SSB 0 remains unchanged, and is the ground area 0. In addition, the duration of 320 ms in which the direction of the SSB beam corresponding to the SSB 0 or the service ground area of the SSB beam remains unchanged is minimum in duration in which directions of SSB beams respectively corresponding to the 64 SSBs sent by the network device or service ground areas of SSB beams remain unchanged. In such a scenario, the valid duration may be set to a minimum time of 320 ms in which the service area of the SSB beam with the same SSB index or the direction of the SSB beam remains unchanged.

It should be noted that in the foregoing descriptions of the value of the valid duration, a specific value of the valid duration is merely an example, and the specific value of the valid duration is not limited in this application.

Based on this solution, the terminal device may restrict the RO selected to send the preamble to be within the validity period, so that a case in which the SSB corresponding to the RO selected by the terminal device is not the optimal SSB at the current moment is avoided, performance of the RO selected by the terminal device is ensured, and performance of sending a random access request is improved.

Optionally, the random access method shown in FIG. 6, the random access method shown in FIG. 11, and the foregoing solution for restricting the RO within the validity period, which are provided in embodiments of this application, may be applied in combination with each other, or may be applied independently. This is not limited in embodiments of this application.

It may be understood that in the foregoing embodiments, the methods and/or steps implemented by the terminal device may alternatively be implemented by a component (for example, a chip or a circuit) that can be used in the terminal device. The methods and/or steps implemented by the network device may alternatively be implemented by a component (for example, a chip or a circuit) that can be used in the network device.

The foregoing mainly describes the solutions provided in embodiments of this application from the perspective of interaction between devices. Correspondingly, an embodiment of this application further provides a communication apparatus, and the communication apparatus is configured to implement the foregoing methods. The communication apparatus may be the terminal device in the foregoing method embodiment, or an apparatus including the foregoing terminal device, or a component applicable to the terminal device. Alternatively, the communication apparatus may be the network device in the foregoing method embodiment, or an apparatus including the foregoing network device, or a component applicable to the network device. It may be understood that, to implement the foregoing functions, the communication apparatus includes a hardware structure and/or a software module for performing a corresponding function. A person skilled in the art should be easily aware that units and algorithm steps in the examples described with reference to embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example and is merely logical function division. During actual implementation, there may be another division manner.

For example, the communication apparatus is the terminal device in the foregoing method embodiment. FIG. 12 is a diagram of a structure of a communication apparatus 1200. The communication apparatus 1200 includes an interface module 1201 and a processing module 1202. The interface module 1201 may also be referred to as a transceiver module or a transceiver unit. The interface module 1201 is configured to implement a transceiver function, and may be, for example, a transceiver circuit, a transceiver machine, a transceiver, or a communication interface.

In a possible design, the interface module 1201 is configured to receive a target synchronization signal block in a synchronization signal block period from a network device. The processing module 1202 is configured to receive first configuration information from the network device based on the target synchronization signal block, where the first configuration information includes a first offset value, the first offset value indicates interval duration between a start time domain position of a first association period and a start time domain position of a reference system frame, and the first association period is a 1st association period in one or more association periods corresponding to the synchronization signal block period. The processing module 1202 is further configured to determine, based on the first configuration information and the target synchronization signal block, a random access occasion that is associated with the target synchronization signal block and that is in the one or more association periods. The interface module 1201 is further configured to send a preamble to the network device on one random access occasion in the random access occasion associated with the target synchronization signal block.

In a possible design, the target synchronization signal block is associated with a plurality of random access occasions, and the synchronization signal block period corresponds to a plurality of association periods. The interface module 1201 is further configured to receive second configuration information from the network device based on the target synchronization signal block, where the second configuration information is used to configure a random access occasion in a second association period, the second configuration information includes a second offset value, and the second offset value indicates interval duration between the second association period and the first association period, or the second offset value indicates interval duration between a start time domain position of the second association period and the start time domain position of the reference system frame. The processing module 1202 is further configured to determine the start time domain position of the second association period based on the second configuration information. The processing module 1202 is further configured to determine the random access occasion in the second association period based on the second configuration information and the start time domain position of the second association period. The processing module 1202 is further configured to determine, based on the target synchronization signal block, a random access occasion that is associated with the target synchronization signal block and that is in the second association period.

In a possible design, that the second configuration information is used to configure a random access occasion in a second association period includes: The second configuration information indicates that there is a random access occasion in a 1st reference time unit in a random access configuration period included in the second association period, where the reference time unit is a slot or a subframe. Alternatively, the second configuration information indicates that a quantity of reference time units in which there is a random access occasion in a random access configuration period included in the second association period is an integer multiple of 2.

In a possible design, that the second configuration information indicates that a quantity of reference time units in which there is a random access occasion in a random access configuration period included in the second association period is an integer multiple of 2 includes: The second configuration information indicates that the quantity of reference time units in which there is a random access occasion in the random access configuration period included in the second association period is the integer multiple of 2, and the reference time units in which there is a random access occasion are continuous in time domain.

In a possible design, the second configuration information indicates that the reference time units in which there is a random access occasion in the random access configuration period included in the second association period are first N reference time units in the random access configuration period, and N is an integer multiple of 2.

In a possible design, the first configuration information includes first information, the first information is used to configure a random access occasion in the first association period, the second configuration information includes second information, the second information is used to configure the random access occasion in the second association period, and the first information is different from the second information.

In a possible design, the first information and the second information are used to configure a preamble format corresponding to the random access occasion.

In a possible design, the first offset value is one of a quantity of symbols, a quantity of slots, a quantity of subframes, or a quantity of system frames.

In a possible design, that the interface module 1201 sends a preamble to the network device on one random access occasion in the random access occasion associated with the target synchronization signal block includes: sending the preamble to the network device on a target random access occasion in the random access occasion associated with the target synchronization signal block, where interval duration between a moment at which the target random access occasion is located and a moment at which the target synchronization signal block is located does not exceed valid duration.

In a possible design, the valid duration is preconfigured by the terminal device or the network device or in a protocol, or is indicated by the network device. Alternatively, the valid duration is predefined in a protocol and indicated by the network device.

In this embodiment, the communication apparatus 1200 is presented in a form of functional modules obtained through integration. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1200 may be in a form of the terminal device shown in FIG. 4.

For example, the processor 401 in the terminal device shown in FIG. 4 may invoke the computer-executable instructions stored in the memory 402, so that the terminal device performs the random access method in the foregoing method embodiment. Specifically, functions/implementation processes of the interface module 1201 and the processing module 1202 in FIG. 12 may be implemented by the processor 401 in the terminal device shown in FIG. 4 by invoking the computer-executable instructions stored in the memory 402. Alternatively, a function/an implementation process of the processing module 1202 in FIG. 12 may be implemented by the processor 401 in the terminal device shown in FIG. 4 by invoking the computer-executable instructions stored in the memory 402, and a function/an implementation process of the interface module 1201 in FIG. 12 may be implemented by the transceiver 403 in the terminal device shown in FIG. 4.

Because the communication apparatus 1200 provided in this embodiment can perform the foregoing random access method, for technical effects that can be obtained by the communication apparatus 1200, refer to the foregoing method embodiment. Details are not described herein again.

For example, the communication apparatus is the network device in the foregoing method embodiment. FIG. 13 is a diagram of a structure of a communication apparatus 1300. The communication apparatus 1300 includes an interface module 1301. The interface module 1301 is configured to implement a transceiver function, and may be, for example, a transceiver circuit, a transceiver machine, a transceiver, or a communication interface.

In a possible design, the interface module 1301 is configured to send a target synchronization signal block in a synchronization signal block period to a terminal device. The interface module 1301 is further configured to send first configuration information to the terminal device, where the first configuration information includes a first offset value, the first offset value indicates interval duration between a start time domain position of a first association period and a start time domain position of a reference system frame, and the first association period is a 1st association period in one or more association periods corresponding to the synchronization signal block period. The interface module 1301 is further configured to receive a preamble from the terminal device on one random access occasion in a random access occasion that is associated with the target synchronization signal block and that is in the one or more association periods.

In a possible design, the target synchronization signal block is associated with a plurality of random access occasions, and the synchronization signal block period corresponds to a plurality of association periods. The interface module 1301 is further configured to send second configuration information to the terminal device, where the second configuration information is used to configure a random access occasion in a second association period, the second configuration information includes a second offset value, and the second offset value indicates interval duration between the second association period and the first association period, or the second offset value indicates interval duration between a start time domain position of the second association period and the start time domain position of the reference system frame.

In a possible design, that the second configuration information is used to configure a random access occasion in a second association period includes: The second configuration information indicates that there is a random access occasion in a 1st reference time unit in a random access configuration period included in the second association period, where the reference time unit is a subframe or a slot. Alternatively, the second configuration information indicates that a quantity of reference time units in which there is a random access occasion in a random access configuration period included in the second association period is an integer multiple of 2.

In a possible design, that the second configuration information indicates that a quantity of reference time units in which there is a random access occasion in a random access configuration period included in the second association period is an integer multiple of 2 includes: The second configuration information indicates that the quantity of reference time units in which there is a random access occasion in the random access configuration period included in the second association period is the integer multiple of 2, and the reference time units in which there is a random access occasion are continuous in time domain.

In a possible design, the second configuration information indicates that the reference time units in which there is a random access occasion in the random access configuration period included in the second association period are first N reference time units in the random access configuration period, and N is an integer multiple of 2.

In a possible design, the first configuration information includes first information, the first information is used to configure a random access occasion in the first association period, the second configuration information includes second information, the second information is used to configure the random access occasion in the second association period, and the first information is different from the second information.

In a possible design, the first information and the second information are used to configure a preamble format corresponding to the random access occasion.

In a possible design, the first offset value is one of a quantity of symbols, a quantity of slots, a quantity of subframes, or a quantity of system frames.

In a possible design, that the interface module 1301 receives a preamble from the terminal device on one random access occasion in a random access occasion that is associated with the target synchronization signal block and that is in the one or more association periods includes: receiving the preamble from the terminal device on a target random access occasion in the random access occasion that is associated with the target synchronization signal block and that is in the one or more association periods, where interval duration between a moment at which the target random access occasion is located and a moment at which the target synchronization signal block is located does not exceed valid duration.

In a possible design, the valid duration is preconfigured by the terminal device or the network device or in a protocol, or is indicated by the network device. Alternatively, the valid duration is predefined in a protocol and indicated by the network device.

In this embodiment, the communication apparatus 1300 is presented in a form of functional modules obtained through integration. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1300 may be in a form of the network device shown in FIG. 4.

For example, the processor 301 in the network device shown in FIG. 4 may invoke the computer-executable instructions stored in the memory 302, so that the network device performs the random access method in the foregoing method embodiment. Specifically, a function/an implementation process of the interface module 1301 in FIG. 13 may be implemented by the processor 301 in the network device shown in FIG. 4 by invoking the computer-executable instructions stored in the memory 302. Alternatively, a function/an implementation process of the interface module 1301 in FIG. 13 may be implemented by the transceiver 303 in the network device shown in FIG. 4.

Because the communication apparatus 1300 provided in this embodiment can perform the foregoing random access method, for technical effects that can be obtained by the communication apparatus 1300, refer to the foregoing method embodiment. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform an operation or processing, the processor may further include a necessary hardware accelerator, for example, an FPGA, a programmable logic device (programmable logic device, PLD), or a logic circuit that implements a dedicated logic operation.

When the foregoing modules or units are implemented by hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may perform the foregoing method procedure by running run necessary software or independently of software.

Optionally, an embodiment of this application further provides a chip system, including at least one processor and an interface. The at least one processor is coupled to a memory through an interface. When the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in this embodiment of this application.

All or some of the foregoing embodiments may be implemented by using software, hardware, firmware, or any combination thereof. When a software program is used to implement the foregoing embodiments, all or some of the foregoing embodiments may be implemented in a form of a computer program product.

This application provides a computer program product, including one or more computer instructions. When the computer instructions are run on a communication apparatus, any method in embodiments of this application is performed.

When the computer program instructions are loaded and executed on a computer, all or some of the procedures or functions according to embodiments of this application are generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), or a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

**Claims**

1. A random access method, wherein the method comprises:

receiving a target synchronization signal block in a synchronization signal block period from a network device; receiving first configuration information from the network device based on the target synchronization signal block, wherein the first configuration information comprises a first offset value, the first offset value indicates interval duration between a start time domain position of a first association period and a start time domain position of a reference system frame, and the first association period is a 1st association period in one or more association periods corresponding to the synchronization signal block period; determining, based on the first configuration information and the target synchronization signal block, a random access occasion that is associated with the target synchronization signal block and that is in the one or more association periods; and

sending a preamble to the network device on one random access occasion in the random access occasion associated with the target synchronization signal block.

2. The method according to claim 1, wherein the target synchronization signal block is associated with a plurality of random access occasions, the synchronization signal block period corresponds to a plurality of association periods, and the method further comprises:

receiving second configuration information from the network device based on the target synchronization signal block, wherein the second configuration information is used to configure a random access occasion in a second association period, the second configuration information comprises a second offset value, and the second offset value indicates interval duration between the second association period and the first association period, or the second offset value indicates interval duration between a start time domain position of the second association period and the start time domain position of the reference system frame;

determining the start time domain position of the second association period based on the second configuration information;

determining the random access occasion in the second association period based on the second configuration information and the start time domain position of the second association period; and

determining, based on the target synchronization signal block, a random access occasion that is associated with the target synchronization signal block and that is in the second association period.

3. The method according to claim 2, wherein that the second configuration information is used to configure a random access occasion in a second association period comprises:

the second configuration information indicates that there is a random access occasion in a $1^{st}$ reference time unit in a random access configuration period comprised in the second association period, wherein the reference time unit is a slot or a subframe; or

the second configuration information indicates that a quantity of reference time units in which there is a random access occasion in a random access configuration period comprised in the second association period is an integer multiple of 2.

4. The method according to claim 3, wherein that the second configuration information indicates that a quantity of reference time units in which there is a random access occasion in a random access configuration period comprised in the second association period is an integer multiple of 2 comprises:

the second configuration information indicates that the quantity of reference time units in which there is a random access occasion in the random access configuration period comprised in the second association period is the integer multiple of 2, and the reference time units in which there is a random access occasion are continuous in time domain.

5. The method according to claim 4, wherein the second configuration information indicates that the reference time units in which there is a random access occasion in the random access configuration period comprised in the second association period are first N reference time units in the random access configuration period, and N is an integer multiple of 2.

6. The method according to any one of claims 2 to 5, wherein the first configuration information comprises first information, the first information is used to configure a random access occasion in the first association period, the second configuration information comprises second information, the second information is used to configure the random access occasion in the second association period, and the first information is different from the second information.

7. The method according to claim 6, wherein the first information and the second information are used to configure a preamble format corresponding to the random access occasion.

8. A random access method, wherein the method comprises:

sending a target synchronization signal block in a synchronization signal block period to a terminal device;

sending first configuration information to the terminal device, wherein the first configuration information comprises a first offset value, the first offset value indicates interval duration between a start time domain position of a first association period and a start time domain position of a reference system frame, and the first association period is a $1^{st}$ association period in one or more association periods corresponding to the synchronization signal block period; and

receiving a preamble from the terminal device on one random access occasion in a random access occasion that is associated with the target synchronization signal block and that is in the one or more association periods.

9. The method according to claim 8, wherein the target synchronization signal block is associated with a plurality of random access occasions, the synchronization signal block period corresponds to a plurality of association periods, and the method further comprises:

sending second configuration information to the terminal device, wherein the second configuration information is used to configure a random access occasion in a second association period, the second configuration information comprises a second offset value, and the second offset value indicates interval duration between the second association period and the first association period, or the second offset value indicates interval duration between a start time domain position of the second association period and the start time domain position of the reference system frame.

10. The method according to claim 9, wherein the second configuration information indicates that there is a random access occasion in a $1^{st}$ reference time unit in a random access configuration period comprised in the second association period, wherein the reference time unit is a slot or a subframe; or

the second configuration information indicates that a quantity of reference time units in which there is a random access occasion in a random access configuration period comprised in the second association period is an integer multiple of 2.

11. The method according to claim 10, wherein that the second configuration information indicates that a quantity of reference time units in which there is a random access occasion in a random access configuration period comprised in the second association period is an integer multiple of 2 comprises:

the second configuration information indicates that the quantity of reference time units in which there is a random access occasion in the random access configuration period comprised in the second association period is the integer multiple of 2, and the reference time units in which there is a random access occasion are continuous in time domain.

12. The method according to claim 11, wherein the second configuration information indicates that the reference time units in which there is a random access occasion in the random access configuration period comprised in the second association period are first N reference time units in the random access configuration period, and N is an integer multiple of 2.

13. The method according to any one of claims 9 to 12, wherein the first configuration information comprises first information, the first information is used to configure a random access occasion in the first association period, the second configuration information comprises second information, the second information is used to configure the random access occasion in the first association period, and the first information is different from the second information.

14. A communication apparatus, which is configured to implement the method according to any one of claims 1 to 7; or a module or a unit configured to implement the method according to any one of claims 8 to 13.

15. A computer-readable storage medium, wherein the computer-readable storage medium stores a computer program, and when the computer program is executed by a computer, the method according to any one of claims 1 to 7 is performed, or the method according to any one of claims 8 to 13 is performed.

**Patentansprüche**

1. Direktzugriffsverfahren, wobei das Verfahren Folgendes umfasst:

Empfangen eines Zielsynchronisationssignalblocks in einem Synchronisationssignalblockzeitraum aus einer Netzwerkvorrichtung;
Empfangen erster Konfigurationsinformationen aus der Netzwerkvorrichtung basierend auf dem Zielsynchronisationssignalblock, wobei die ersten Konfigurationsinformationen einen ersten Versatzwert umfassen, der erste Versatzwert eine Intervalldauer zwischen einer Startzeitdomänenposition eines ersten Assoziationszeitraums und einer Startzeitdomänenposition eines Referenzsystemrahmens angibt, und der erste Assoziationszeitraum ein 1. Assoziationszeitraum in einem oder mehreren Assoziationszeiträumen entsprechend dem Synchronisationssignalblockzeitraum ist;

Bestimmen einer Direktzugriffsgelegenheit, die mit dem Zielsynchronisationssignalblock assoziiert ist und die in der einen oder den mehreren Assoziationszeiträumen liegt, basierend auf den ersten Konfigurationsinformationen und dem Zielsynchronisationssignalblock; und

Senden einer Präambel an die Netzwerkvorrichtung bei einer Direktzugriffsgelegenheit in der Direktzugriffsgelegenheit, die mit dem Zielsynchronisationssignalblock assoziiert ist.

2. Verfahren nach Anspruch 1, wobei der Zielsynchronisationssignalblock mit einer Vielzahl von Direktzugriffsgelegenheiten assoziiert ist, der Synchronisationssignalblockzeitraum einer Vielzahl von Assoziationszeiträumen entspricht, und das Verfahren ferner Folgendes umfasst:

Empfangen zweiter Konfigurationsinformationen aus der Netzwerkvorrichtung basierend auf dem Zielsynchronisationssignalblock, wobei die zweiten Konfigurationsinformationen verwendet werden, um eine Direktzugriffsgelegenheit in einem zweiten Assoziationszeitraum zu konfigurieren, die zweiten Konfigurationsinformationen einen zweiten Versatzwert umfassen, und der zweite Versatzwert eine Intervalldauer zwischen dem zweiten Assoziationszeitraum und dem ersten Assoziationszeitraum angibt, oder der zweite Versatzwert eine Intervalldauer zwischen einer Startzeitdomänenposition des zweiten Assoziationszeitraums und der Startzeitdomänenposition des Referenzsystemrahmens angibt;

Bestimmen der Startzeitdomänenposition des zweiten Assoziationszeitraums basierend auf den zweiten Konfigurationsinformationen;

Bestimmen der Direktzugriffsgelegenheit in dem zweiten Assoziationszeitraum basierend auf den zweiten Konfigurationsinformationen und der Startzeitdomänenposition des zweiten Assoziationszeitraums; und

Bestimmen einer Direktzugriffsgelegenheit, die mit dem Zielsynchronisationssignalblock assoziiert ist und die in dem zweiten Assoziationszeitraum liegt, basierend auf dem Zielsynchronisationssignalblock.

3. Verfahren nach Anspruch 2, wobei der Umstand, dass die zweiten Konfigurationsinformationen verwendet werden, um eine Direktzugriffsgelegenheit in einem zweiten Assoziationszeitraum zu konfigurieren, Folgendes umfasst:

die zweiten Konfigurationsinformationen geben an, dass eine Direktzugriffsgelegenheit in einer 1. Referenzzeiteinheit in einem Direktzugriffskonfigurationszeitraum vorliegt, der in dem zweiten Assoziationszeitraum enthalten ist, wobei die Referenzzeiteinheit ein Schlitz oder ein Unterrahmen ist; oder

die zweiten Konfigurationsinformationen geben an, dass eine Menge von Referenzzeiteinheiten, in welchen eine Direktzugriffsgelegenheit in einem wahlfreien Zugriffskonfigurationszeitraum vorliegt, der in dem zweiten Assoziationszeitraum enthalten ist, ein ganzzahliges Vielfaches von 2 ist.

4. Verfahren nach Anspruch 3, wobei der Umstand, dass die zweiten Konfigurationsinformationen angeben, dass eine Menge von Referenzzeiteinheiten, in welchen eine Direktzugriffsgelegenheit in einem wahlfreien Zugriffskonfigurationszeitraum vorliegt, der in dem zweiten Assoziationszeitraum enthalten ist, ein ganzzahliges Vielfaches von 2 ist, Folgendes umfasst:
die zweiten Konfigurationsinformationen geben an, dass die Menge von Referenzzeiteinheiten, in welchen eine Direktzugriffsgelegenheit in dem Direktzugriffskonfigurationszeitraum vorliegt, der in dem zweiten Assoziationszeitraum enthalten ist, das ganzzahlige Vielfache von 2 ist, und die Referenzzeiteinheiten, in welchen eine Direktzugriffsgelegenheit vorliegt, in einer Zeitdomäne kontinuierlich sind.

5. Verfahren nach Anspruch 4, wobei die zweiten Konfigurationsinformationen angeben, dass die Referenzzeiteinheiten, in welchen eine Direktzugriffsgelegenheit in dem Direktzugriffskonfigurationszeitraum vorliegt, der in dem zweiten Assoziationszeitraum enthalten ist, die ersten N Referenzzeiteinheiten in dem Direktzugriffskonfigurationszeitraum sind, und N ein ganzzahliges Vielfaches von 2 ist.

6. Verfahren nach einem der Ansprüche 2 bis 5, wobei die ersten Konfigurationsinformationen erste Informationen umfassen, die ersten Informationen verwendet werden, um eine Direktzugriffsgelegenheit in dem ersten Assoziationszeitraum zu konfigurieren, die zweiten Konfigurationsinformationen zweite Informationen umfassen, die zweiten Informationen verwendet werden, um die Direktzugriffsgelegenheit in dem zweiten Assoziationszeitraum zu konfigurieren, und sich die ersten Informationen von den zweiten Informationen unterscheiden.

7. Verfahren nach Anspruch 6, wobei die ersten Informationen und die zweiten Informationen verwendet werden, um ein Präambelformat entsprechend der Direktzugriffsgelegenheit zu konfigurieren.

8. Direktzugriffsverfahren, wobei das Verfahren Folgendes umfasst:

   Senden eines Zielsynchronisationssignalblocks in einem Synchronisationssignalblockzeitraum an eine Endgerätevorrichtung;
   Senden erster Konfigurationsinformationen an die Endgerätevorrichtung, wobei die ersten Konfigurationsinformationen einen ersten Versatzwert umfassen, der erste Versatzwert eine Intervalldauer zwischen einer Startzeitdomänenposition eines ersten Assoziationszeitraums und einer Startzeitdomänenposition eines Referenzsystemrahmens angibt, und die erste Assoziationszeitraum ein 1. Assoziationszeitraum in einem oder mehreren Assoziationszeiträumen entsprechend dem Synchronisationssignalblockzeitraum ist; und
   Empfangen einer Präambel aus der Endgerätevorrichtung bei einer Direktzugriffsgelegenheit in einer Direktzugriffsgelegenheit, die mit dem Zielsynchronisationssignalblock assoziiert ist und die in dem einen oder den mehreren Assoziationszeiträumen vorliegt.

9. Verfahren nach Anspruch 8, wobei der Zielsynchronisationssignalblock mit einer Vielzahl von Direktzugriffsgelegenheiten assoziiert ist, der Synchronisationssignalblockzeitraum einer Vielzahl von Assoziationszeiträumen entspricht, und das Verfahren ferner Folgendes umfasst:
   Senden zweiter Konfigurationsinformationen an die Endgerätevorrichtung, wobei die zweiten Konfigurationsinformationen verwendet werden, um eine Direktzugriffsgelegenheit in einem zweiten Assoziationszeitraum zu konfigurieren, die zweiten Konfigurationsinformationen einen zweiten Versatzwert umfassen, und der zweite Versatzwert eine Intervalldauer zwischen dem zweiten Assoziationszeitraum und dem ersten Assoziationszeitraum angibt, oder der zweite Versatzwert eine Intervalldauer zwischen einer Startzeitdomänenposition des zweiten Assoziationszeitraums und der Startzeitdomänenposition des Referenzsystemrahmens angibt.

10. Verfahren nach Anspruch 9, wobei die zweiten Konfigurationsinformationen angeben, dass eine Direktzugriffsgelegenheit in einer 1. Referenzzeiteinheit in einem Direktzugriffskonfigurationszeitraum vorliegt, der in dem zweiten Assoziationszeitraum enthalten ist, wobei die Referenzzeiteinheit ein Schlitz oder ein Unterrahmen ist; oder die zweiten Konfigurationsinformationen angeben, dass eine Menge von Referenzzeiteinheiten, in welchen eine Direktzugriffsgelegenheit in einem wahlfreien Zugriffskonfigurationszeitraum vorliegt, der in dem zweiten Assoziationszeitraum enthalten ist, ein ganzzahliges Vielfaches von 2 ist.

11. Verfahren nach Anspruch 10, wobei der Umstand, dass die zweiten Konfigurationsinformationen angeben, dass eine Menge von Referenzzeiteinheiten, in welchen eine Direktzugriffsgelegenheit in einem Direktzugriffskonfigurationszeitraum vorliegt, der in dem zweiten Assoziationszeitraum enthalten ist, ein ganzzahliges Vielfaches von 2 ist, Folgendes umfasst:
   die zweiten Konfigurationsinformationen geben an, dass die Menge von Referenzzeiteinheiten, in welchen eine Direktzugriffsgelegenheit in dem Direktzugriffskonfigurationszeitraum vorliegt, der in dem zweiten Assoziationszeitraum enthalten ist, das ganzzahlige Vielfache von 2 ist, und die Referenzzeiteinheiten, in welchen eine Direktzugriffsgelegenheit vorliegt, in einer Zeitdomäne kontinuierlich sind.

12. Verfahren nach Anspruch 11, wobei die zweiten Konfigurationsinformationen angeben, dass die Referenzzeiteinheiten, in welchen eine Direktzugriffsgelegenheit in dem Direktzugriffskonfigurationszeitraum vorliegt, der in dem zweiten Assoziationszeitraum enthalten ist, die ersten N Referenzzeiteinheiten in dem Direktzugriffskonfigurationszeitraum sind, und N ein ganzzahliges Vielfaches von 2 ist.

13. Verfahren nach einem der Ansprüche 9 bis 12, wobei die ersten Konfigurationsinformationen erste Informationen umfassen, die ersten Informationen verwendet werden, um eine Direktzugriffsgelegenheit in dem ersten Assoziationszeitraum zu konfigurieren, die zweiten Konfigurationsinformationen zweite Informationen umfassen, die zweiten Informationen verwendet werden, um die Direktzugriffsgelegenheit in dem ersten Assoziationszeitraum zu konfigurieren, und sich die ersten Informationen von den zweiten Informationen unterscheiden.

14. Kommunikationseinrichtung, welche dazu konfiguriert ist, das Verfahren nach einem der Ansprüche 1 bis 7 zu implementieren; oder Modul oder Einheit, das bzw. die dazu konfiguriert ist, das Verfahren nach einem der Ansprüche 8 bis 13 zu implementieren.

15. Computerlesbares Speichermedium, wobei das computerlesbare Speichermedium ein Computerprogramm speichert, und, wenn das Computerprogramm auf einem Computer ausgeführt wird, das Verfahren nach einem der Ansprüche 1 bis 7 durchgeführt wird oder das Verfahren nach einem der Ansprüche 8 bis 13 durchgeführt wird.

**Revendications**

1. Procédé d'accès aléatoire, dans lequel le procédé comprend :

   la réception d'un bloc de signal de synchronisation cible dans une période de bloc de signal de synchronisation à partir d'un dispositif réseau ;
   la réception des premières informations de configuration à partir du dispositif réseau basées sur le bloc de signal de synchronisation cible, dans lequel les premières informations de configuration comprennent une première valeur de décalage, la première valeur de décalage indique la durée de l'intervalle entre une position de domaine temporel de début d'une première période d'association et une position de domaine temporel de début d'une trame du système de référence, et la première période d'association est une première période d'association dans une ou plusieurs périodes d'association correspondant à la période du bloc de signal de synchronisation ;
   la détermination, sur la base des premières informations de configuration et du bloc de signal de synchronisation cible, d'une occasion d'accès aléatoire associée au bloc de signal de synchronisation cible et qui se situe dans les une ou plusieurs périodes d'association ; et
   l'envoi d'un préambule au dispositif réseau lors d'une occasion d'accès aléatoire dans l'occasion d'accès aléatoire associée au bloc de signal de synchronisation cible.

2. Procédé selon la revendication 1, dans lequel le bloc de signal de synchronisation cible est associé à une pluralité d'occasions d'accès aléatoire, la période du bloc de signal de synchronisation correspond à une pluralité de périodes d'association, et le procédé comprend en outre :

   la réception des secondes informations de configuration à partir du dispositif réseau sur la base du bloc de signal de synchronisation cible, dans lequel les secondes informations de configuration sont utilisées pour configurer une occasion d'accès aléatoire dans une seconde période d'association, les secondes informations de configuration comprennent une seconde valeur de décalage, et la seconde valeur de décalage indique la durée de l'intervalle entre la seconde période d'association et la première période d'association, ou la seconde valeur de décalage indique la durée de l'intervalle entre une position de domaine temporel de début de la seconde période d'association et la position de domaine temporel de début de la trame du système de référence ;
   la détermination de la position de domaine temporel de début de la seconde période d'association sur la base des secondes informations de configuration ;
   la détermination de l'occasion d'accès aléatoire dans la seconde période d'association sur la base des secondes informations de configuration et de la position de domaine temporel de début de la seconde période d'association ; et
   la détermination, sur la base du bloc de signal de synchronisation cible, d'une occasion d'accès aléatoire associée au bloc de signal de synchronisation cible et qui se trouve dans la seconde période d'association.

3. Procédé selon la revendication 2, dans lequel les secondes informations de configuration sont utilisées pour configurer une occasion d'accès aléatoire dans une seconde période d'association, comprend :

   les secondes informations de configuration indiquent qu'il existe une occasion d'accès aléatoire dans une $1^{re}$ unité de temps de référence au sein d'une période de configuration d'accès aléatoire comprise dans la seconde période d'association, dans lequel l'unité de temps de référence est un intervalle de temps ou une sous-trame ; ou
   les secondes informations de configuration indiquent qu'une quantité d'unités de temps de référence dans laquelle il y a une occasion d'accès aléatoire dans une période de configuration d'accès aléatoire comprise dans la seconde période d'association est un multiple entier de 2.

4. Procédé selon la revendication 3, dans lequel les secondes informations de configuration indiquent qu'une quantité d'unités de temps de référence dans laquelle il y a une occasion d'accès aléatoire dans une période de configuration d'accès aléatoire comprise dans la seconde période d'association est un multiple entier de 2 comprend :
   les secondes informations de configuration indiquent que la quantité d'unités de temps de référence dans laquelle il y a une occasion d'accès aléatoire dans la période de configuration d'accès aléatoire comprise dans la seconde période d'association est le multiple entier de 2, et que les unités de temps de référence dans lesquelles il y a une occasion d'accès aléatoire sont continues dans le domaine temporel.

**5.** Procédé selon la revendication 4, dans lequel les secondes informations de configuration indiquent que les unités de temps de référence dans lesquelles il y a une occasion d'accès aléatoire dans la période de configuration d'accès aléatoire comprise dans la seconde période d'association sont les N premières unités de temps de référence dans la période de configuration d'accès aléatoire, et N est un multiple entier de 2.

**6.** Procédé selon l'une quelconque des revendications 2 à 5, dans lequel les premières informations de configuration comprennent les premières informations, les premières informations sont utilisées pour configurer une occasion d'accès aléatoire dans la première période d'association, les secondes informations de configuration comprennent les secondes informations, les secondes informations sont utilisées pour configurer l'occasion d'accès aléatoire dans la seconde période d'association, et les premières informations sont différentes des secondes informations.

**7.** Procédé selon la revendication 6, dans lequel les premières informations et les secondes informations sont utilisées pour configurer un format de préambule correspondant à l'occasion d'accès aléatoire.

**8.** Procédé d'accès aléatoire, dans lequel le procédé comprend :

l'envoi d'un bloc de signal de synchronisation cible dans une période de bloc de signal de synchronisation à un dispositif terminal ;
l'envoi des premières informations de configuration au dispositif terminal, dans lequel les premières informations de configuration comprennent une première valeur de décalage, la première valeur de décalage indique la durée de l'intervalle entre une position de domaine temporel de début d'une première période d'association et une position de domaine temporel de début d'une trame du système de référence, et la première période d'association est une première période d'association dans une ou plusieurs périodes d'association correspondant à la période du bloc de signal de synchronisation ; et
la réception d'un préambule à partir du dispositif terminal lors d'une occasion d'accès aléatoire dans une occasion d'accès aléatoire associée au bloc de signal de synchronisation cible et qui se trouve dans les une ou plusieurs périodes d'association.

**9.** Procédé selon la revendication 8, dans lequel le bloc de signal de synchronisation cible est associé à une pluralité d'occasions d'accès aléatoire, la période du bloc de signal de synchronisation correspond à une pluralité de périodes d'association, et le procédé comprend en outre :
l'envoi des secondes informations de configuration au dispositif terminal, dans lequel les secondes informations de configuration sont utilisées pour configurer une occasion d'accès aléatoire dans une seconde période d'association, les secondes informations de configuration comprennent une seconde valeur de décalage, et la seconde valeur de décalage indique la durée de l'intervalle entre la seconde période d'association et la première période d'association, ou la seconde valeur de décalage indique la durée de l'intervalle entre une position de domaine temporel de début de la seconde période d'association et la position de domaine temporel de début de la trame du système de référence.

**10.** Procédé selon la revendication 9, dans lequel les secondes informations de configuration indiquent qu'il existe une occasion d'accès aléatoire dans une 1<sup>re</sup> unité de temps de référence au sein d'une période de configuration d'accès aléatoire comprise dans la seconde période d'association, dans lequel l'unité de temps de référence est un intervalle de temps ou une sous-trame ; ou
les secondes informations de configuration indiquent qu'une quantité d'unités de temps de référence dans laquelle il y a une occasion d'accès aléatoire dans une période de configuration d'accès aléatoire comprise dans la seconde période d'association est un multiple entier de 2.

**11.** Procédé selon la revendication 10, dans lequel les secondes informations de configuration indiquent qu'une quantité d'unités de temps de référence dans laquelle il y a une occasion d'accès aléatoire dans une période de configuration d'accès aléatoire comprise dans la seconde période d'association est un multiple entier de 2 comprend :
les secondes informations de configuration indiquent que la quantité d'unités de temps de référence dans laquelle il y a une occasion d'accès aléatoire dans la période de configuration d'accès aléatoire comprise dans la seconde période d'association est le multiple entier de 2, et que les unités de temps de référence dans lesquelles il y a une occasion d'accès aléatoire sont continues dans le domaine temporel.

**12.** Procédé selon la revendication 11, dans lequel les secondes informations de configuration indiquent que les unités de temps de référence dans lesquelles il y a une occasion d'accès aléatoire dans la période de configuration d'accès aléatoire comprise dans la seconde période d'association sont les N premières unités de temps de référence dans la période de configuration d'accès aléatoire, et N est un multiple entier de 2.

**13.** Procédé selon l'une quelconque des revendications 9 à 12, dans lequel les premières informations de configuration comprennent les premières informations, les premières informations sont utilisées pour configurer une occasion d'accès aléatoire dans la première période d'association, les secondes informations de configuration comprennent les secondes informations, les secondes informations sont utilisées pour configurer l'occasion d'accès aléatoire dans la première période d'association, et les premières informations sont différentes des secondes informations.

**14.** Appareil de communication configuré pour mettre en œuvre le procédé selon l'une quelconque des revendications 1 à 7 ; ou un module ou une unité configuré pour mettre en œuvre le procédé selon l'une quelconque des revendications 8 à 13.

**15.** Support de stockage lisible par ordinateur, dans lequel le support de stockage lisible par ordinateur stocke un programme informatique, et lorsque le programme informatique est exécuté par un ordinateur, le procédé selon l'une quelconque des revendications 1 à 7 est réalisé, ou le procédé selon l'une quelconque des revendications 8 à 13 est réalisé.

| Subframe | 0 | | 1 | | 2 | | 3 | | 4 | | 5 | | 6 | | 7 | | 8 | | 9 | |
|---|---|---|---|---|---|---|---|---|---|---|---|---|---|---|---|---|---|---|---|---|
| Slot SCS=30 kHz | 0 | 1 | 2 | 3 | 4 | 5 | 6 | 7 | 8 | 9 | 0 | 1 | 2 | 3 | 4 | 5 | 6 | 7 | 8 | 9 |

PRACH configuration period whose PRACH configuration index is 251

RO: RO 0 | RO 1 | RO 2 | RO 3     RO 4 | RO 5 | RO 6 | RO 7

FIG. 1

FIG. 2

Radio access network

Terminal
device

Base
station

Core
network

Uu

NG

Satellite

NTN gateway

RRU

3-1

Terminal
device

Radio access network

Core
network

Uu

NG

Satellite
base station

SRI-based
NG

NTN gateway

3-2

FIG. 3

FIG. 4

EP 4 564 984 B1

Terminal device

FIG. 5

Terminal device

Network device

S601: Target synchronization signal block in a synchronization signal block period

S602: First configuration information including a first offset value, where the first offset value indicates interval duration between a start time domain position of a first association period and a start time domain position of a reference system frame

S603: Determine, based on the first configuration information and the target synchronization signal block, a random access occasion that is associated with the target synchronization signal block and that is in one or more association periods

S604: Send a preamble on one random access occasion in the random access occasion associated with the target synchronization signal block

FIG. 6

Downlink for the
network device

Uplink for a
network device

| SSBs 0 and 1 |
| SSBs 2 and 3 |
| SSBs 4 and 5 |
| SSB 6 and 7 |

System frame whose
frame number is 0

| SIB 1 |

System frame whose
frame number is 1

| RO 0 |
| RO 1 |
| RO 2 |
| RO 3 |

System frame whose
frame number is 2

| RO 4 |
| RO 5 |
| RO 6 |
| RO 7 |

System frame whose
frame number is 3

FIG. 7

Downlink for the
network device

Uplink for a
network device

| SSBs 0 and 1 |
| SSBs 2 and 3 |
| SSBs 4 and 5 |
| SSB 6 and 7 |
| |
| |
| |
| SIB 1 |

System frame whose
frame number is 0

⋮ ⋮

| SSBs 8 and 9 |
| SSBs 10 and 11 |
| SSBs 12 and 13 |
| SSBs 14 and 15 |

| RO 0 |
| RO 1 |
| RO 2 |
| RO 3 |
| RO 4 |
| RO 5 |
| RO 6 |
| RO 7 |

System frame whose
frame number is 2

| RO 0 |
| RO 1 |
| RO 2 |
| RO 3 |
| RO 4 |
| RO 5 |
| RO 6 |
| RO 7 |

System frame whose
frame number is 3

| SSBs 16 and 17 |
| SSBs 18 and 19 |
| SSBs 20 and 21 |
| SSBs 22 and 23 |

| RO 8 |
| RO 9 |
| RO 10 |
| RO 11 |
| RO 12 |
| RO 13 |
| RO 14 |
| RO 15 |

System frame whose
frame number is 4

| RO |

RO in a first
association period

| RO 8 |
| RO 9 |
| RO 10 |
| RO 11 |
| RO 12 |
| RO 13 |
| RO 14 |
| RO 15 |

System frame whose
frame number is 5

| RO |

RO in a second
association period

FIG. 8

Downlink for the network device | Uplink for a network device

| SSBs 0 and 1 |
| SSBs 2 and 3 |
| SSBs 4 and 5 |
| SSB 6 and 7 |

| SIB 1 |

System frame whose frame number is 0

⋮ ⋮

| SSBs 8 and 9 |
| SSBs 10 and 11 |
| SSBs 12 and 13 |
| SSBs 14 and 15 |

| RO 0 |
| RO 1 |
| RO 2 |
| RO 3 |
| RO 4 |
| RO 5 |
| RO 6 |
| RO 7 |

System frame whose frame number is 2

⋮ ⋮

| SSBs 16 and 17 |
| SSBs 18 and 19 |
| SSBs 20 and 21 |
| SSB 22-23 |

| RO 8 |
| RO 9 |
| RO 10 |
| RO 11 |
| RO 12 |
| RO 13 |
| RO 14 |
| RO 15 |

System frame whose frame number is 4

⋮ ⋮

| RO 120 |
| RO 121 |
| RO 122 |
| RO 123 |
| RO 124 |
| RO 125 |
| RO 126 |
| RO 127 |

System frame whose frame number is 34

| RO |

RO in a first association period

| RO 0 |
| RO 1 |
| RO 2 |
| RO 3 |
| RO 4 |
| RO 5 |
| RO 6 |
| RO 7 |

System frame whose frame number is 35

| RO |

RO in a second association period

| RO 128 |
| RO 129 |
| RO 130 |
| RO 131 |
| RO 132 |
| RO 133 |
| RO 134 |
| RO 135 |

System frame whose frame number is 36

| RO 8 |
| RO 9 |
| RO 10 |
| RO 11 |
| RO 12 |
| RO 13 |
| RO 14 |
| RO 15 |

System frame whose frame number is 37

FIG. 9

Downlink for the
network device

Uplink for a network
device

| SSBs 0 and 1 |
|---|
| SSBs 2 and 3 |
| SSBs 4 and 5 |
| SSB 6 and 7 |
| |
| SIB 1 |

System frame
whose frame
number is 0

⋮ ⋮

| SSBs 8 and 9 |
|---|
| SSBs 10 and 11 |
| SSBs 12 and 13 |
| SSBs 14 and 15 |

| RO 0 |
|---|
| RO 1 |
| RO 2 |
| RO 3 |
| RO 4 |
| RO 5 |
| RO 6 |
| RO 7 |

System frame
whose frame
number is 2

| RO 0 |
|---|
| RO 1 |
| RO 2 |
| RO 3 |

System frame
whose frame
number is 3

| SSBs 16 and 17 |
|---|
| SSBs 18 and 19 |
| SSBs 20 and 21 |
| SSBs 22 and 23 |

| RO 8 |
|---|
| RO 9 |
| RO 10 |
| RO 11 |
| RO 12 |
| RO 13 |
| RO 14 |
| RO 15 |

System frame
whose frame
number is 4

| RO |
|---|

RO in a first
association period

| RO 4 |
|---|
| RO 5 |
| RO 6 |
| RO 7 |

System frame
whose frame
number is 5

| RO |
|---|

RO in a second
association period

⋮ ⋮

FIG. 10

Terminal
device

Network
device

S1101: Target synchronization signal block in a
synchronization signal block period

S1102: Third configuration information, indicating
that there is an RO in a 1$^{st}$ reference time unit in a
PRACH configuration period, or indicating that a
quantity of reference time units in which there is an
RO is an integer multiple of 2

S1103: Determine, based on the third
configuration information and the
target synchronization signal block, a
random access occasion associated
with the target synchronization signal
block

S1104: Send a preamble on one random access
occasion in the random access occasion associated
with the target synchronization signal block

FIG. 11

Communication apparatus ⌐1200

Interface
module ⌐1201

Processing
module ⌐1202

FIG. 12

Communication apparatus ⌐1300

Interface
module ⌐1301

FIG. 13

**REFERENCES CITED IN THE DESCRIPTION**

**Patent documents cited in the description**

- CN 202211215716

- CN 202310545494